# EUROPÄISCHE PATENTSCHRIFT

(11) **EP 3 102 441 B1**
(45) Veröffentlichungstag und Bekanntmachung des Hinweises auf die Patenterteilung: **24.06.2020**
(21) Anmeldenummer: 15702293.0
(22) Anmeldetag: 04.02.2015
(51) Int. Cl.: B60C 23/00, B60B 7/00, B60B 19/08, B60B 27/00, F16J 15/3236, F16C 33/72, F16J 15/00, F16C 41/00

(54) **FAHRZEUGACHSBAUGRUPPE MIT INTEGRIERTER DRUCKMITTELLEITUNG ZUR REIFENBEFÜLLUNG**
VEHICLE AXLE ASSEMBLY WITH INTEGRATED PRESSURISING MEDIUM LINE FOR FILLING THE TYRES
ENSEMBLE ESSIEU DE VÉHICULE AUTOMOBILE À CONDUIT DE FLUIDE SOUS PRESSION INTÉRIEUR POUR LE GONFLAGE DES PNEUS

(30) Priorität: 04.02.2014 DE 102014001373
(43) Veröffentlichungstag der Anmeldung: 14.12.2016
(73) Patentinhaber: GV Engineering GmbH, 71296 Heimsheim (DE)
(72) Erfinder: TSIBERIDIS, Konstantinos, 74076 Heilbronn (DE)
(74) Vertreter: Beyer, Andreas
(86) Internationale Anmeldenummer: PCT/EP2015/052302
(87) Internationale Veröffentlichungsnummer: WO 2015/118013

(56) Entgegenhaltungen:
- WO-A1-2007/090361
- DE-T2- 69 000 187
- US-A- 5 642 946
- US-A1- 2005 052 074

## Beschreibung

Die vorliegende Erfindung betrifft allgemein das Gebiet luftbereifter Fahrzeuge und insbesondere eine Fahrzeugachsbaugruppe mit einer integrierten Druckmittelleitung zur Zuführung eines Druckmittels in einen Reifen.

Zur Befüllung eines Fahrzeugreifens mit einem Druckmittel, in der Regel Druckluft, ist es bekannt, ein Ventil am Fahrzeugrad vorzusehen, über welches das Druckmittel in den Reifen eingebracht werden kann. Bei Personenkraftwagen, Lastkraftwagen, Nutzfahrzeugen oder auch Anhängern sind solche Ventile üblicherweise im Bereich einer Felge, auf der der Reifen montiert ist, so angeordnet, dass sie für eine Person, die die Befüllung des Reifens vornehmen will, leicht zugänglich sind. Typischerweise wird dabei eine fahrzeugexterne Druckmittelquelle an das Ventil des Reifens angeschlossen, üblicherweise mittels einer Schlauchleitung, um so den Reifendruck kontrollieren und gegebenenfalls korrigieren zu können.

Dieses Verfahren der Reifendruckregulierung hat grundsätzlich den Nachteil, dass eine Regulierung nur an Orten vorgenommen werden kann, an denen eine Druckmittelquelle vorhanden ist, z. B. an Tankstellen, da in jedem Fall eine Ankopplung an eine fahrzeugexterne Druckmittelquelle vonnöten ist. Grundsätzlich wäre es wünschenswert, eine Reifendruckregulierung autonom vornehmen zu können, beispielsweise um im Fernlastverkehr den Reifendruck schnell an veränderte Beladungsverhältnisse, Fahrbahnoberflächen und Umgebungstemperaturen anzupassen.

Aus der US 2005/0052074 A1 ist eine Fahrzeugachsbaugruppe bekannt, bei der einem Fahrzeugrad Luft zur Füllung eines Reifens zugeführt werden kann durch eine Leitung, die im Inneren eines Endes einer Fahrzeugachse in axialer Richtung verläuft und sich aus dem Ende der Fahrzeugachse hinaus in eine Radnabenkappe erstreckt, an der ein T-förmiges Anschlussstück vorgesehen ist, welches zur Verbindung mit einem Reifen des Fahrzeugrades ausgestaltet ist.

Aus der WO 2007/090361 A1 ist ein Radlager mit einer Reifendruck-Reguliereinrichtung und einem zweireihigen Wälzlager bekannt. Das als Radlager dienende Kugellager hat einen inneren Laufring und einen äußeren Laufring und weist im Bereich eines axialen Endes des Kugellagers einen Wellendichtring zur äußeren Abdichtung des Kugellagers auf. Zur Druckdurchführung durch das Kugellager ist eine speziell dafür vorgesehene Ringdichtung in der Mitte des Kugellagers angeordnet.

Aus der US 5 642 946 A ist ein Kugellager bekannt, welches an seinen beiden axialen Enden Wellendichtringe aufweist, die zwischen einem äußeren Laufring und einem inneren Laufring angeordnet sind, um ein Eindringen von Schmutz in das Kugellager zu verhindern. Zur Druckdurchführung durch das Kugellager ist eine speziell dafür vorgesehene Ringdichtung in der Mitte des Kugellagers angeordnet.

Es ist Aufgabe der Erfindung, eine verbesserte Lösung anzugeben, mit der eine Druckmittelzu- und -abfuhr in einen Fahrzeugreifen autonom und vorzugsweise auch während der Fahrt vorgenommen werden kann.

Gemäß einem Aspekt ist diese Aufgabe gelöst ausgehend von einer ersten Fahrzeugachsbaugruppe mit einer Nabe, die durch ein Kugellager drehbar um eine Mittellängsachse an einem zylindrischen Achskörper gelagert ist, wobei das Kugellager einen mit dem Achskörper verbundenen, inneren Laufring und einen mit der Nabe verbundenen, äußeren Laufring aufweist.

Gemäß einer ersten Variante weist die erste Fahrzeugachsbaugruppe einen axial inneren Wellendichtring und einen axial äußeren Wellendichtring auf, die abdichtend zwischen den beiden Laufringen angeordnet sind und zwischen den beiden Laufringen eine ringförmige Kammer begrenzen, eine erste Druckmittelleitung, die sich durch den inneren Laufring oder einen der beiden Wellendichtringe erstreckt und in die ringförmige Kammer mündet, und eine zweite Druckmittelleitung, die sich aus der ringförmigen Kammer durch den äußeren Laufring erstreckt und zur Verbindung mit einem auf der Nabe befestigten Rad ausgestaltet ist.

Eine derartige Anordnung hat den Vorteil, dass eine Druckmittelzuführung von einem fahrzeugfesten Teil, nämlich dem Achskörper, in die relativ zum Achskörper rotierende Nabe und damit in das sich um den Achskörper drehende Rad möglich ist. Erreicht wird dies dadurch, dass zwischen den beiden Wellendichtringen eine ringförmige Kammer vorgesehen ist, die eine zur Druckmittelleitung geeignete Kopplung zwischen dem feststehenden Körper und dem sich drehenden Rad herstellt. Der axial innere und der axial äußere Wellendichtring werden dabei axial in einem solchen Abstand voneinander angeordnet, dass ein zwischen den beiden Laufringen vorhandener, im Wesentlichen hohlzylindrischer Raum genutzt wird, um die ringförmige Kammer zu bilden. Die ringförmige Kammer wird durch die innere Mantelfläche des äußeren Laufrings, die äußere Mantelfläche des inneren Laufrings und die beiden Wellendichtringe begrenzt. Die beiden Wellendichtringe sind zwischen den beiden Laufringen im Bereich eines axialen Endes des Kugellagers angeordnet, so dass sie eine zwischen den beiden Laufringen abdichtende Außenhaut für das Kugellager bilden, die ein Eindringen von Staub und Schmutzpartikeln in das Kugellager sowie einen Austritt von Schmiermitteln aus dem Kugellager verhindert.

Die erste Druckmittelleitung ist dazu vorgesehen, ein Druckmittel wie etwa Druckluft von einer an Bord des Fahrzeugs befindlichen Druckmittelquelle in die ringförmige Kammer zu leiten. Die Druckmittelquelle kann z.B. ein Kompressor oder ein Druckmittelbehälter sein, in dem beispielsweise Druckluft gespeichert ist. Die erste Druckmittelleitung ist relativ zum Achskörper feststehend. Sie kann außerhalb des Achskörpers geführt sein und an diesen mittels geeigneter Halterungen befestigt sein. Ist die erste Druckmittelleitung außerhalb des Achskörpers geführt, kann sie sich vorzugsweise axial durch einen der beiden Wellendichtringe erstrecken, um in die ringförmige Kammer zu münden. Ebenso ist es möglich, die erste Druckmittelleitung zumindest streckenweise durch den Achskörper zu führen, etwa durch eine in dem Achskörper ausgebildete Bohrung. Von dort aus kann die erste Druckmittelleitung durch den inneren Laufring geführt sein, etwa durch eine in dem inneren Laufring ausgebildete Bohrung, um in die ringförmige Kammer zu münden.

Die zweite Druckmittelleitung dient dazu, das Druckmittel aus der ringförmigen Kammer weiterzuleiten und ist an ihrem kammerfernen Ende zur Verbindung mit einem auf der Nabe befestigten Rad ausgestaltet. Ein solches Rad kann eine Felge und einen auf der Felge montierten Reifen mit einem Ventil zum Anschluss der zweiten Druckmittelleitung umfassen. Die zweite Druckmittelleitung kann somit bis zu dem Ventil geführt und an dieses angeschlossen sein, so dass die Druckmittelzuführung in den Reifen erfolgen kann.

Gemäß einer zweiten Variante weist die erste Fahrzeugachsbaugruppe einen Wellendichtring mit wenigstens zwei sich radial erstreckenden Umfangsdichtlippen auf, der abdichtend zwischen den beiden Laufringen angeordnet ist und zwischen den Umfangsdichtlippen und einem der beiden Laufringe eine ringförmige Kammer begrenzt, eine erste Druckmittelleitung, die sich durch den inneren Laufring und/oder den Wellendichtring erstreckt und in die ringförmige Kammer mündet, und eine zweite Druckmittelleitung, die sich aus der ringförmigen Kammer durch den Wellendichtring und/oder den äußeren Laufring erstreckt und zur Verbindung mit einem auf der Nabe befestigten Rad ausgestaltet ist.

Die zweite Variante unterscheidet sich von der ersten Variante der ersten Fahrzeugachsbaugruppe dadurch, dass die zur Druckmittelleitung geeignete Kopplung zwischen den beiden Laufringen des Kugellagers nicht durch zwei axial voneinander beabstandete Wellendichtringe, sondern durch einen einzigen Wellendichtring realisiert ist.

Ein solcher Wellendichtring weist im Allgemeinen einen ringförmigen Grundkörper auf, dessen eine Mantelfläche eine in Umfangsrichtung verlaufende Dichtfläche bildet und von dessen entgegengesetzter, anderer Mantelfläche sich radial wenigstens zwei Umfangsdichtlippen erstrecken, zwischen denen ein nach außen offener, äußerer Hohlraum begrenzt ist. Der Wellendichtring weist einen Druckmitteleinlass in einer Außenwand des Grundkörpers und einen Druckmittelauslass auf, der in den äußeren Hohlraum mündet und in Fluidverbindung mit dem Einlass steht. Ist ein solcher Wellendichtring dichtend zwischen den beiden Laufringen des Kugellagers angeordnet, so ist der zwischen den beiden Umfangsdichtlippen begrenzte, äußere Hohlraum des Wellendichtrings zusätzlich durch eine Mantelfläche des mit den Umfangsdichtlippen in Kontakt stehenden Laufrings begrenzt, so dass die ringförmige Kammer gebildet wird.

Sind die Umfangsdichtlippen des Wellendichtrings an seiner äußeren Mantelfläche gebildet, so ist die ringförmige Kammer zwischen der äußeren Mantelfläche des Wellendichtrings, den Umfangsdichtlippen und der inneren Mantelfläche des äußeren Laufrings begrenzt. In diesem Fall erstreckt sich die erste Druckmittelleitung durch den Wellendichtring in die ringförmige Kammer. Die erste Druckmittelleitung ist hierfür zu dem in der Außenwand des Grundkörpers des Wellendichtrings vorhandenen Druckmitteleinlass geführt und mit diesem druckdicht verbunden. Die zweite Druckmittelleitung erstreckt sich aus der ringförmigen Kammer durch den äußeren Laufring.

Sind die Umfangsdichtlippen des Wellendichtrings an seiner inneren Mantelfläche gebildet, so ist die ringförmige Kammer zwischen der inneren Mantelfläche des Wellendichtrings, den Umfangsdichtlippen und der äußeren Mantelfläche des inneren Laufrings begrenzt. In diesem Fall erstreckt sich die erste Druckmittelleitung durch den inneren Laufring, um in die ringförmige Kammer zu münden. Die zweite Druckmittelleitung erstreckt sich aus der ringförmigen Kammer durch den Wellendichtring, nämlich über den Druckmittelauslass bis zu dem in einer Außenwand des Grundkörpers des Wellendichtrings vorhandenen Druckmitteleinlass, von welchem aus sie sich durch den äußeren Laufring erstreckt.

Gemäß einer dritten Variante weist die erste Fahrzeugachsbaugruppe ein mit einer inneren Mantelfläche des äußeren Laufrings verbundenes Ringprofil mit U-förmigem Querschnitt auf, dessen Seitenwände axial oder radial verlaufen, einen zwischen den Seitenwänden angeordneten, bezüglich des inneren Laufrings drehfesten Dichtring, der in dem Ringprofil eine ringförmige Kammer begrenzt, eine erste Druckmittelleitung, die sich durch den Dichtring erstreckt und in die ringförmige Kammer mündet, und eine zweite Druckmittelleitung, die sich aus der ringförmigen Kammer durch das Ringprofil und den äußeren Laufring erstreckt und zur Verbindung mit einem auf der Nabe befestigten Rad ausgestaltet ist.

Die dritte Variante unterscheidet sich von der ersten und zweiten Variante der ersten Fahrzeugachsbaugruppe dadurch, dass die zur Druckmittelleitung geeignete Kopplung zwischen den beiden Laufringen des Kugellagers auf andere Weise gebildet wird. Anstatt die Kopplung durch ein oder zwei Wellendichtringe herzustellen, wird in dieser Variante ein mit der inneren Mantelfläche des äußeren Laufrings verbundenes Ringprofil verwendet, zwischen dessen Seitenwänden ein Dichtring abdichtend angeordnet wird.

Die ringförmige Kammer ist in dieser Variante zwischen den Innenflächen der Wände des U-förmigen Ringprofils und dem Dichtring begrenzt. Die erste Druckmittelleitung erstreckt sich durch den Dichtring, um in die ringförmige Kammer zu münden, und die zweite Druckmittelleitung erstreckt sich aus der ringförmigen Kammer durch eine der Wände des Ringprofils und anschließend durch den äußeren Laufring.

Im Folgenden wird nun auf Merkmale Bezug genommen, die besondere Ausführungsformen der zweiten Druckmittelleitung beschreiben und gleichermaßen auf die erste, zweite und dritte Variante der ersten Fahrzeugachsbaugruppe anwendbar sind.

In einer Ausführungsform weist die Nabe einen Flansch zur Befestigung des Rads auf, der an dem äußeren Laufring des Kugellagers befestigt ist. Die zweite Druckmittelleitung kann sich dann durch den äußeren Laufring und den Flansch bis zu einem an dem Flansch vorgesehenen Druckmittelleitungsanschluss erstrecken. Die zweite Druckmittelleitung verläuft dann im Inneren des äußeren Laufrings und des Flansches und kann z.B. durch eine in dem äußeren Laufring bzw. in dem Flansch ausgebildete Bohrung realisiert sein. Auch ist denkbar, den äußeren Laufring und/oder den Flansch als Gussteil mit einer entsprechend ausgebildeten Leitung herzustellen.

Der Flansch kann mit einer axialen Innenseite an einer axialen Außenseite des äußeren Laufrings flächig anliegen und mit geeigneten Befestigungsmitteln am äußeren Laufring gehalten sein. Am Übergang zwischen dem äußeren Laufring und dem Flansch kann eine Dichtungsanordnung vorgesehen sein, die sicherstellt, dass der Übergang der zweiten Druckmittelleitung zwischen den beiden Bauteilen druckdicht ist. So ist es etwa vorstellbar, an dem Übergang eine Ausnehmung mit einem darin angeordneten Dichtungsring vorzusehen, etwa einem O-Ring, der dicker ist als die Ausnehmung tief ist, so dass der Dichtungsring beim Montieren des Flansches an dem äußeren Laufring in der Ausnehmung zusammengepresst wird und damit ein druckdichter Übergang für die zweite Druckmittelleitung zwischen dem Flansch und dem äußeren Laufring bereitgestellt wird.

Der Druckmittelleitungsanschluss, zu dem sich die zweite Druckmittelleitung durch den Flansch erstreckt, kann an einer axialen Außenseite des Flansches vorgesehen sein. Von einem solchen Druckmittelleitungsanschluss kann die zweite Druckmittelleitung axial außerhalb des Flansches in im Wesentlichen radialer Richtung zu einem Ventil des auf dem Flansch der Nabe befestigten Rads geführt sein. Alternativ kann der Druckmittelleitungsanschluss auch an einer Außenumfangsfläche des Flansches vorgesehen sein. Vorteilhafterweise ist die zweite Druckmittelleitung dann bis zu einer radial äußersten Außenumfangsfläche des Flansches geführt, so dass nur ein verhältnismäßig kurzes Druckmittelleitungsstück nötig ist, um die zweite Druckmittelleitung von dem Druckmittelleitungsanschluss bis zu dem Ventil am Rad weiterzuführen.

Bei einer Ausgestaltung, bei der die Nabe einen Flansch zur Befestigung des Rads aufweist, kann der äußere Laufring auch eine Bohrung zur Aufnahme einer Druckmittelleitungsschraube umfassen, wobei die Druckmittelleitungsschraube zur Befestigung des Flansches an dem äußeren Laufring dient. Die zweite Druckmittelleitung kann sich dann durch den äußeren Laufring in die Bohrung erstrecken und anschließend durch die Druckmittelleitungsschraube bis zu einem Druckmittelleitungsanschluss verlaufen, der am Kopf der Schraube vorgesehen ist. Die zweite Druckmittelleitung kann hierbei als sich von der Spitze der Schraube bis zum Kopf der Schraube ausgebildete Bohrung ausgeführt sein.

Vorteilhafterweise mündet die zweite Druckmittelleitung in einen Grund der Bohrung. Die Länge der Druckmittelleitungsschraube kann so bemessen sein, dass die Spitze der Schraube nicht bis zum Grund der Bohrung reicht, so dass im Bereich des Grunds der Bohrung ein Hohlraum gebildet ist. Ein solcher Hohlraum kann als Kopplungsraum zwischen der Druckmittelleitungsschraube und dem am Grund der Bohrung ankommenden Abschnitt der zweiten Druckmittelleitung dienen. Eine druckdichte Abdichtung dieses Hohlraums kann bereits durch den Formschluss zwischen dem Gewinde der Schraube und dem mit diesem zusammenwirkenden Gewinde der Bohrung gewährleistet sein. Um eine Abdichtung vollständig sicherzustellen, kann auch zwischen dem Kopf der Schraube und dem Flansch ein Dichtungsring, beispielsweise ein O-Ring, angeordnet sein.

In einer Weiterbildung einer solchen Ausführungsform kann der Flansch mit dem äußeren Laufring durch mehrere Schrauben verbunden sein und die Bohrung, in der die Druckmittelleitungsschraube aufgenommen ist, mit Bohrungen fluidleitend verbunden sein, in denen die übrigen zur Befestigung dienenden Schrauben aufgenommen sind. Eine fluidleitende Verbindung zwischen den einzelnen Bohrungen kann beispielsweise durch einen in den äußeren Laufring des Kugellagers gebildeten Ringkanal realisiert sein, der die einzelnen Hohlräume der Bohrungen miteinander verbindet. Der Ringkanal kann seinerseits durch in dem äußeren Laufring ausgebildete Bohrungen realisiert sein.

Um die zweite Druckmittelleitung von einem an dem Flansch oder an der Druckmittelleitungsschraube vorgesehenen Druckmittelanschluss bis zu einem Ventil am Rad zu führen, kann die zweite Druckmittelleitung von dem Druckmittelleitungsanschluss bis zur Verbindung mit dem Ventil am Rad als Rohrleitung oder als Schlauchleitung ausgebildet sein. Der Druckmittelleitungsanschluss selbst kann vorteilhafterweise eine für einen Benutzer leicht handhabbare Verschlusstechnik aufweisen, beispielsweise mit einer Einrastfunktion versehen sein.

Bei einer Ausgestaltung, bei der die Nabe einen Flansch zur Befestigung des Rads aufweist und bei der der Flansch an dem äußeren Laufring befestigt ist, kann sich die zweite Druckmittelleitung auch durch den äußeren Laufring oder entlang einer äußeren Mantelfläche desselben bis zu dem Flansch und dann entlang einer axialen Innenseite des Flansches bis zu einer Außenumfangsfläche des Flansches erstrecken. An der Außenumfangsfläche des Flansches kann die zweite Druckmittelleitung ohne Unterbrechung weiter zur Verbindung mit dem Ventil am Rad geführt sein. Es versteht sich jedoch, dass auch hier ein Druckmittelleitungsanschluss an der Außenumfangsfläche des Flansches vorgesehen sein kann, von welchem aus die Druckmittelleitung zum Ventil am Rad weitergeführt sein kann.

In einer Weiterbildung kann entlang der äußeren Mantelfläche des äußeren Laufrings und/oder entlang der axialen Innenseite des Flansches eine Ausnehmung gebildet sein und die zweite Druckmittelleitung in der Ausnehmung angeordnet sein. Eine derartige Ausnehmung kann das Verlegen der zweiten Druckmittelleitung an der axialen Innenseite des Flansches erleichtern. Die zweite Druckmittelleitung kann dabei ganz oder nur teilweise in die Ausnehmung versenkt sein.

Gemäß einem weiteren Aspekt ist die eingangs genannte Aufgabe gelöst ausgehend von einer zweiten Fahrzeugachsbaugruppe mit einer Nabe, die um eine Mittellängsachse drehbar an einem zylindrischen Achskörper gelagert ist und eine Abdeckung umfasst, die ein axiales Ende des Achskörpers überdeckt.

Gemäß einer ersten Variante weist die zweite Fahrzeugachsbaugruppe einen an einer axialen Innenseite der Abdeckung gebildeten, zylindrischen Vorsprung auf, der sich mit einem zylindrischen Endabschnitt des Achskörpers axial überlappt, einen axial inneren Wellendichtring und einen axial äußeren Wellendichtring, die abdichtend zwischen dem Vorsprung und dem Endabschnitt angeordnet sind und zwischen dem Vorsprung und dem Endabschnitt eine ringförmige Kammer begrenzen, eine erste Druckmittelleitung, die sich durch den Endabschnitt oder einen der beiden Wellendichtringe erstreckt und in die ringförmige Kammer mündet, und eine zweite Druckmittelleitung, die sich aus der ringförmigen Kammer durch den Vorsprung erstreckt und zur Verbindung mit einem auf der Nabe befestigten Rad ausgestaltet ist.

Der Vorsprung der Abdeckung kann dabei eine hohlzylindrische Form aufweisen, die den zylindrischen Endabschnitt im Bereich der axialen Überlappung umschließt. Umgekehrt kann auch der Endabschnitt des Achskörpers eine hohlzylindrische Form aufweisen, die den zylindrischen Vorsprung im Bereich der axialen Überlappung umschließt.

Eine derartige Anordnung hat den Vorteil, dass eine Druckmittelzuführung von einem fahrzeugfesten Teil, nämlich dem Achskörper, in die relativ zum Achskörper rotierende Nabe und damit in das sich um den Achskörper drehende Rad möglich ist. Erreicht wird dies dadurch, dass zwischen den beiden Wellendichtringen eine ringförmige Kammer vorgesehen ist, die eine zur Druckmittelleitung geeignete Kopplung zwischen dem feststehenden Körper und dem sich drehenden Rad herstellt. Der axial innere und der axial äußere Wellendichtring werden dabei axial in einem solchen Abstand voneinander angeordnet, dass ein zwischen dem Vorsprung und dem Endabschnitt vorhandener, im Wesentlichen hohlzylindrischer Raum genutzt wird, um die ringförmige Kammer zu bilden. Umschließt der Vorsprung den Endabschnitt, so ist die ringförmige Kammer durch die innere Mantelfläche des Vorsprungs, die äußere Mantelfläche des Endabschnitts und die beiden Wellendichtringe begrenzt. Umschließt der Endabschnitt den Vorsprung, so ist die ringförmige Kammer durch die innere Mantelfläche des Endabschnitts, die äußere Mantelfläche des Vorsprungs und die beiden Wellendichtringe begrenzt.

Die erste Druckmittelleitung ist dazu vorgesehen, ein Druckmittel wie etwa Druckluft von einer an Bord des Fahrzeugs befindlichen Druckmittelquelle in die ringförmige Kammer zu leiten. Die Druckmittelquelle kann z.B. ein Kompressor oder ein Druckmittelbehälter sein, in dem beispielsweise Druckluft gespeichert ist. Die erste Druckmittelleitung ist relativ zum Achskörper feststehend. Sie kann außerhalb des Achskörpers geführt sein und an diesen mittels geeigneter Halterungen befestigt sein. Ist die erste Druckmittelleitung außerhalb des Achskörpers geführt, kann sie sich vorzugsweise axial durch einen der beiden Wellendichtringe erstrecken, um in die ringförmige Kammer zu münden. Ebenso ist es möglich, die erste Druckmittelleitung zumindest streckenweise durch den Achskörper zu führen, etwa durch eine in dem Achskörper ausgebildete Bohrung.

Erstreckt sich die erste Druckmittelleitung durch einen der beiden Wellendichtringe, so kann sie sich in einer vorteilhaften Ausgestaltung auch in zumindest zwei Teilleitungen spalten, bevor sie sich durch den Wellendichtring erstreckt. Insbesondere können die Teilleitungen an dem Wellendichtring in dessen Umfangsrichtung gleichmäßig verteilt angeordnet sein, bevor sie einzeln in die ringförmige Kammer münden.

Die zweite Druckmittelleitung dient dazu, das Druckmittel aus der ringförmigen Kammer weiterzuleiten und ist an ihrem kammerfernen Ende zur Verbindung mit einem auf der Nabe befestigten Rad ausgestaltet. Ein solches Rad kann eine Felge und einen auf der Felge montierten Reifen mit einem Ventil zum Anschluss der zweiten Druckmittelleitung umfassen. Die zweite Druckmittelleitung kann somit bis zu dem Ventil geführt und an dieses angeschlossen sein, so dass die Druckmittelzuführung in den Reifen erfolgen kann.

Gemäß einer zweiten Variante weist die zweite Fahrzeugachsbaugruppe einen Wellendichtring mit wenigstens zwei sich radial erstreckenden Umfangsdichtlippen auf, der abdichtend zwischen dem Vorsprung und dem Endabschnitt angeordnet ist und zwischen den Umfangsdichtlippen und dem Vorsprung oder dem Endabschnitt eine ringförmige Kammer begrenzt, eine erste Druckmittelleitung, die sich durch den Endabschnitt und/oder den Wellendichtring erstreckt und in die ringförmige Kammer mündet, und eine zweite Druckmittelleitung, die sich aus der ringförmigen Kammer durch den Wellendichtring und/oder den Vorsprung erstreckt und zur Verbindung mit einem auf der Nabe befestigten Rad ausgestaltet ist.

Die zweite Variante unterscheidet sich von der ersten Variante der zweiten Fahrzeugachsbaugruppe dadurch, dass die zur Druckmittelleitung geeignete Kopplung zwischen dem Vorsprung und dem Endabschnitt nicht durch zwei axial voneinander beabstandete Wellendichtringe, sondern durch einen einzigen Wellendichtring realisiert ist.

Ein solcher Wellendichtring weist im Allgemeinen einen ringförmigen Grundkörper auf, dessen eine Mantelfläche eine in Umfangsrichtung verlaufende Dichtfläche bildet und von dessen entgegengesetzter, anderer Mantelfläche sich radial wenigstens zwei Umfangsdichtlippen erstrecken, zwischen denen ein nach außen offener, äußerer Hohlraum begrenzt ist. Der Wellendichtring weist einen Druckmitteleinlass in einer Außenwand des Grundkörpers und einen Druckmittelauslass auf, der in den äußeren Hohlraum mündet und in Fluidverbindung mit dem Einlass steht. Ist ein solcher Wellendichtring dichtend zwischen dem Vorsprung und dem Endabschnitt angeordnet, so ist der zwischen den beiden Umfangsdichtlippen begrenzte, äußere Hohlraum des Wellendichtrings zusätzlich durch eine Mantelfläche des mit den Umfangsdichtlippen in Kontakt stehenden Vorsprungs bzw. Endabschnitts begrenzt, so dass die ringförmige Kammer gebildet wird.

Sind die Umfangsdichtlippen des Wellendichtrings an seiner äußeren Mantelfläche gebildet, so ist die ringförmige Kammer zwischen der äußeren Mantelfläche des Wellendichtrings, den Umfangsdichtlippen und der inneren Mantelfläche des Vorsprungs bzw. Endabschnitts begrenzt. In diesem Fall erstreckt sich die erste Druckmittelleitung durch den Wellendichtring in die ringförmige Kammer. Die erste Druckmittelleitung ist hierfür zu dem in der Außenwand des Grundkörpers des Wellendichtrings vorhandenen Druckmitteleinlass geführt und mit diesem druckdicht verbunden. Die zweite Druckmittelleitung erstreckt sich aus der ringförmigen Kammer durch den Vorsprung bzw. Endabschnitt.

Sind die Umfangsdichtlippen des Wellendichtrings an seiner inneren Mantelfläche gebildet, so ist die ringförmige Kammer zwischen der inneren Mantelfläche des Wellendichtrings, den Umfangsdichtlippen und der äußeren Mantelfläche des Endabschnitts bzw. Vorsprungs begrenzt. In diesem Fall erstreckt sich die erste Druckmittelleitung durch den Endabschnitt bzw. Vorsprung, um in die ringförmige Kammer zu münden. Die zweite Druckmittelleitung erstreckt sich aus der ringförmigen Kammer durch den Wellendichtring, nämlich über den Druckmittelauslass bis zu dem in einer Außenwand des Grundkörpers des Wellendichtrings vorhandenen Druckmitteleinlass, von welchem aus sie sich durch den Vorsprung bzw. Endabschnitt erstreckt.

Erstreckt sich die erste Druckmittelleitung durch den Wellendichtring, so kann sie sich in einer vorteilhaften Ausgestaltung in zumindest zwei Teilleitungen spalten, bevor sie sich durch den Wellendichtring erstreckt. Insbesondere können die Teilleitungen an dem Wellendichtring in dessen Umfangsrichtung gleichmäßig verteilt angeordnet sein, bevor sie einzeln in die ringförmige Kammer münden.

Gemäß einer dritten Variante weist die zweite Fahrzeugachsbaugruppe ein mit einer axialen Innenseite der Abdeckung verbundenes Ringprofil mit U-förmigem Querschnitt auf, dessen Seitenwände axial oder radial verlaufen, einen zwischen den Seitenwänden angeordneten, bezüglich des Achskörpers drehfesten Dichtring, der in dem Ringprofil eine ringförmige Kammer begrenzt, eine erste Druckmittelleitung, die sich durch den Dichtring erstreckt und in die ringförmige Kammer mündet, und eine zweite Druckmittelleitung, die sich aus der ringförmigen Kammer durch das Ringprofil und die Abdeckung erstreckt und zur Verbindung mit einem auf der Nabe befestigten Rad ausgestaltet ist.

Die dritte Variante unterscheidet sich von der ersten und zweiten Variante der zweiten Fahrzeugachsbaugruppe dadurch, dass die zur Druckmittelleitung geeignete ringförmige Kammer auf eine andere Weise gebildet wird. Anstatt die Kopplung durch einen oder zwei Wellendichtringe herzustellen, wird in dieser Variante ein mit der axialen Innenseite der Abdeckung verbundenes Ringprofil verwendet, zwischen dessen Seitenwänden ein Dichtring abdichtend angeordnet wird.

Des Weiteren unterscheidet sich die dritte Variante von der ersten und zweiten Variante der zweiten Fahrzeugachsbaugruppe dadurch, dass an der axialen Innenseite der Abdeckung nicht notwendigerweise ein zylindrischer Vorsprung gebildet ist, der sich mit einem zylindrischen Endabschnitt des Achskörpers axial überlappt, wenngleich dies aber analog zu der ersten bzw. zweiten Variante der zweiten Fahrzeugachsbaugruppe möglich ist. In letzterem Fall kann das Ringprofil mit einem an der axialen Innenseite der Abdeckung gebildeten, zylindrischen Vorsprung verbunden sein.

Die ringförmige Kammer ist zwischen den Innenflächen der Wände des U-förmigen Ringprofils und dem Dichtring begrenzt. Die erste Druckmittelleitung erstreckt sich durch den Dichtring, um in die ringförmige Kammer zu münden, und die zweite Druckmittelleitung erstreckt sich aus der ringförmigen Kammer durch eine der Wände des Ringprofils und anschließend durch die Abdeckung.

Erstreckt sich die erste Druckmittelleitung durch den Dichtring, so kann sie sich in einer vorteilhaften Ausgestaltung in zumindest zwei Teilleitungen spalten, bevor sie sich durch den Dichtring erstreckt. Insbesondere können die Teilleitungen an dem Dichtring in dessen Umfangsrichtung gleichmäßig verteilt angeordnet sein, bevor sie einzeln in die ringförmige Kammer münden.

Das mit der Abdeckung verbundene Ringprofil kann als separates Teil ausgestaltet sein, welches an der Abdeckung bzw. an dem an ihr gebildeten Vorsprung befestigt ist. In einer vorteilhaften Ausführungsform kann das Ringprofil auch einstückig mit der Abdeckung ausgebildet sein, beispielsweise zusammen mit der Abdeckung gegossen sein, wenn die Abdeckung ein Gussteil ist.

Im Folgenden wird nun auf Merkmale Bezug genommen, die besondere Ausführungsformen der zweiten Druckmittelleitung beschreiben und gleichermaßen auf die erste, zweite und dritte Variante der zweiten Fahrzeugachsbaugruppe anwendbar sind.

In einer Ausführungsform erstreckt sich die zweite Druckmittelleitung durch die Abdeckung bis zu einem Druckmittelanschluss, der an einer axialen Außenseite der Abdeckung vorgesehen ist. In einer anderen Ausführungsform weist die Nabe einen Flansch zur Befestigung des Rads auf, wobei die Abdeckung mit dem Flansch verbunden ist. Die zweite Druckmittelleitung kann sich dann durch die Abdeckung und den Flansch bis zu einem an dem Flansch vorgesehenen Druckmittelleitungsanschluss erstrecken. Die zweite Druckmittelleitung verläuft in diesem Fall im Inneren der Abdeckung und des Flansches und kann z.B. durch eine in der Abdeckung bzw. in dem Flansch ausgebildete Bohrung realisiert sein. Auch ist denkbar, die Abdeckung und/oder den Flansch als Gussteil mit einer entsprechend ausgebildeten Leitung herzustellen.

Die Abdeckung kann mit einer Seite flächig an einer Seite des Flansches anliegen und mit geeigneten Befestigungsmitteln am Flansch gehalten sein. Beispielsweise kann die Abdeckung mit einer axialen Innenseite an einer axialen Außenseite des Flansches flächig aneinander liegen und z.B. durch Schrauben befestigt sein. Auch möglich ist, dass die Abdeckung mit ihrer äußeren Mantelfläche mit einer inneren Mantelfläche des Flansches flächig in Kontakt ist. Freilich ist auch denkbar, die Abdeckung einstückig mit dem Flansch auszubilden.

An einem Übergang zwischen der Abdeckung und dem Flansch kann eine Dichtungsanordnung vorgesehen sein, die sicherstellt, dass der Übergang der zweiten Druckmittelleitung zwischen den beiden Bauteilen druckdicht ist. So ist es etwa vorstellbar, an dem Übergang eine Ausnehmung mit einem darin angeordneten Dichtungsring vorzusehen, etwa einem O-Ring, der dicker ist als die Ausnehmung tief ist, so dass der Dichtungsring beim Montieren der Abdeckung an dem Flansch in der Ausnehmung zusammengepresst wird und damit ein druckdichter Übergang für die zweite Druckmittelleitung zwischen der Abdeckung und dem Flansch bereitgestellt wird.

Der Druckmittelleitungsanschluss, zu dem sich die zweite Druckmittelleitung durch den Flansch erstreckt, kann an einer axialen Außenseite des Flansches vorgesehen sein. Von diesem Druckmittelleitungsanschluss kann die zweite Druckmittelleitung axial außerhalb des Flansches in im Wesentlichen radialer Richtung zu einem Ventil des auf dem Flansch der Nabe befestigten Rads geführt sein. Alternativ kann der Druckmittelleitungsanschluss auch an einer Außenumfangsfläche des Flansches vorgesehen sein. Vorteilhafterweise ist die zweite Druckmittelleitung dann bis zu einer radial äußersten Außenumfangsfläche geführt, so dass nur ein verhältnismäßig kurzes Druckmittelleitungsstück nötig ist, um die zweite Druckmittelleitung von dem Druckmittelleitungsanschluss bis zu dem Ventil am Rad weiterzuführen.

Um die zweite Druckmittelleitung von einem an dem Flansch oder an der Abdeckung vorgesehenen Druckmittelanschluss bis zu einem Ventil am Rad zu führen, kann die zweite Druckmittelleitung von dem Druckmittelleitungsanschluss bis zur Verbindung mit dem Ventil am Rad als Rohrleitung oder als Schlauchleitung ausgebildet sein. Der Druckmittelleitungsanschluss selbst kann vorteilhafterweise eine für einen Benutzer leicht handhabbare Verschlusstechnik aufweisen und beispielsweise mit einer Einrastfunktion versehen sein.

Bei einer Ausgestaltung, bei der die Nabe einen Flansch zur Befestigung des Rads aufweist und bei der die Abdeckung mit dem Flansch verbunden ist, kann sich die zweite Druckmittelleitung auch durch die Abdeckung und den Flansch und dann entlang einer axialen Innenseite des Flansches bis zu einer Außenumfangsfläche des Flansches erstrecken. An der Außenumfangsfläche des Flansches kann sich die zweite Druckmittelleitung ohne Unterbrechung weiter zur Verbindung mit dem Ventil am Rad geführt sein. Es versteht sich jedoch, dass auch hier ein Druckmittelleitungsanschluss an der Außenumfangsfläche des Flansches vorgesehen sein kann, von welchem aus die Druckmittelleitung zum Ventil am Rad weitergeführt sein kann.

In einer Weiterbildung kann entlang der axialen Innenseite des Flansches eine Ausnehmung gebildet sein und die zweite Druckmittelleitung in der Ausnehmung angeordnet sein. Eine derartige Ausnehmung kann das Verlegen der zweiten Druckmittelleitung an der axialen Innenseite des Flansches erleichtern. Die zweite Druckmittelleitung kann dabei ganz oder nur teilweise in die Ausnehmung versenkt sein.

Im Folgenden wird auf Merkmale Bezug genommen, die besondere Ausführungsformen im Bereich der ringförmigen Kammer der jeweils ersten Variante der ersten und zweiten Fahrzeugachsbaugruppe beschreiben, insbesondere hinsichtlich möglicher Ausgestaltungen der beiden Wellendichtringe. Da die nachfolgenden Ausführungen auf die erste und die zweite Fahrzeugachsbaugruppe gleichermaßen anwendbar sind, wird im Folgenden - um unnötige Wiederholungen zu vermeiden - die gemeinsame Bezeichnung "radial äußerer Körper" verwendet, um den äußeren Laufring der ersten Fahrzeugachsbaugruppe sowie den hohlzylindrischen, den Endabschnitt umschließenden Vorsprung bzw. den hohlzylindrischen, den Vorsprung umschließenden Endabschnitt der zweiten Fahrzeugachsbaugruppe zu bezeichnen. Analog wird die gemeinsame Bezeichnung "radial innerer Körper" verwendet, um den inneren Laufring der ersten Fahrzeugachsbaugruppe sowie den zylindrischen, vom Endabschnitt umschlossenen Vorsprung bzw. den zylindrischen, vom Vorsprung umschlossenen Endabschnitt der zweiten Fahrzeugachsbaugruppe zu bezeichnen.

Jeder der beiden Wellendichtringe kann so ausgestaltet und angeordnet sein, dass er an dem radial äußeren Körper fixiert ist, beispielsweise durch Reibschluss, und bei einer Drehung des radial äußeren Körpers um den radial inneren Körper auf der äußeren Mantelfläche des radial inneren Körpers gleitet. Gleichermaßen kann jeder der beiden Wellendichtringe am radial inneren Körper fixiert sein und bei einer Drehung des radial äußeren Körpers um den radial inneren Körper auf der inneren Mantelfläche des radial äußeren Körpers gleiten. Mündet die erste Druckmittelleitung durch einen der beiden Wellendichtringe in die ringförmige Kammer, so muss der betroffene Wellendichtring relativ zum Achskörper feststehen. Mündet die erste Druckmittelleitung durch den radial inneren Körper in die ringförmige Kammer, so können die beiden Wellendichtringe jeder für sich relativ zum radial inneren Körper oder relativ zum radial äußeren Körper feststehen.

Bei einer Zuführung von Druckmittel durch die erste Druckmittelleitung entsteht in der ringförmigen Kammer ein Überdruck, d.h. ein größerer Druck als der Atmosphärendruck, der danach trachtet, die beiden Wellendichtringe axial auseinanderzudrücken. Um einem axialen Auseinanderdriften der beiden Wellendichtringe entgegenzuwirken, kann wenigstens einer der beiden Wellendichtringe, vorzugsweise jedoch beide, benachbart zu der ringförmigen Kammer mit einem radialen Kragen versehen sein. Wenn ein Wellendichtring an dem radial äußeren Körper fixiert ist, dann wird ein solcher Kragen am Wellendichtring radial innen ausgebildet sein. Wenn ein Wellendichtring am radial inneren Körper fixiert ist, dann wird der Kragen am Wellendichtring radial außen gebildet sein. In beiden Fällen führt die von dem Kragen an der kontaktierten Fläche erzeugte Reibkraft zu einer verbesserten axialen Fixierung des jeweiligen Wellendichtrings.

Einem möglichen Auseinanderdriften der beiden Wellendichtringe kann auch dadurch begegnet werden, dass auf der äußeren Mantelfläche des radial inneren Körpers gegenüber einem radial inneren Kragen eines Wellendichtrings eine Ringnut vorhanden ist, in die der Kragen radial hineinragt. Analog kann auf der inneren Mantelfläche des radial äußeren Körpers gegenüber einem radial äußeren Kragen eines Wellendichtrings eine Ringnut vorhanden sein, in die der Kragen radial hineinragt. Auch kann auf der äußeren Mantelfläche des radial inneren Körpers eine sich in Umfangsrichtung erstreckende Rippe vorhanden sein, an der sich ein radial innerer Kragen eines Wellendichtrings zumindest bei einem Überdruck in der Kammer axial abstützt. Analog kann auf der inneren Mantelfläche des radial äußeren Körpers eine sich in Umfangsrichtung erstreckende Rippe vorhanden sein, an der sich ein radial äußerer Kragen eines Wellendichtrings zumindest bei einem Überdruck in der Kammer axial abstützt.

Weiter kann ein axiales Auseinanderdriften der beiden Wellendichtringe auch dadurch unterbunden werden, dass die beiden Wellendichtringe axial starr oder elastisch miteinander gekoppelt sind. Eine starre Kopplung kann beispielsweise durch Anbringen eines oder mehrerer starrer Verbindungselemente zwischen den beiden Wellendichtringen erreicht werden. Eine elastische Kopplung kann etwa durch Anbringen eines oder mehrerer Federelemente zwischen den beiden Wellendichtringen realisiert sein. Die beiden Wellendichtringe können auch als eine Einheit gefertigt sein, wobei ein zwischen den beiden Wellendichtringen erforderlicher Freiraum zur Bildung der ringförmigen Kammer mit radialen Durchlässen vorzusehen ist.

Um einem Überdruck in der ringförmigen Kammer besser standhalten zu können, kann wenigstens einer der Wellendichtringe, insbesondere im Bereich des Kragens, einen Kern aus einem den Wellendichtring versteifenden Material aufweisen. Es kann auch vorgesehen sein, dass ein in einem Bereich des Kragens vorhandener Abschnitt des Kerns bezüglich des übrigen Kerns schwenkbar ist bzw. zum übrigen Kern gelenkig angeordnet ist.

In einer weiteren Ausgestaltung weist wenigstens einer der Wellendichtringe zumindest einen Kanal auf, der sich aus einem inneren Hohlraum des Wellendichtrings in im Wesentlichen radialer Richtung zu einer in einem Bereich zwischen dem Kragen und einer Hauptdichtlippe des Wellendichtrings liegenden Umfangsfläche des Wellendichtrings erstreckt. Durch einen solchen Kanal kann in dem Hohlraum befindliches Schmiermittel zu dem Kragen und der Hauptdichtlippe gelangen und dort für eine permanente Schmierung der Dichtflächen des Wellendichtrings auf dem radial inneren bzw. dem radial äußeren Körper sorgen. Um eine dauerhafte Vorhaltung von Schmiermittel zu ermöglichen, kann der Hohlraum auf der von der ringförmigen Kammer abgewandten Seite des Wellendichtrings mit einer seitlichen Abdeckung versehen sein. Der so abgedichtete Hohlraum kann mit einem Schmiermittel befüllt sein und dann als Schmiermitteldepot dienen, welches nach und nach Schmiermittel zur Schmierung der Dichtflächen des Wellendichtrings auf dem radial inneren bzw. dem radial äußeren Körper durch den zumindest einen Kanal abgibt. Auch denkbar ist, dass die seitliche Abdeckung des Wellendichtrings mit wenigstens einer Schmiermitteleintrittsöffnung versehen ist, die in den inneren Hohlraum des Wellendichtrings führt. Eine solche Ausgestaltung ermöglicht es beispielsweise bei der ersten Fahrzeugachsbaugruppe, dass in dem Kugellager befindliches Schmiermittel durch die Schmiermitteleintrittsöffnung in den Hohlraum eines Wellendichtrings eintreten und sich von dort aus wie beschrieben zu den Dichtflächen des Wellendichtrings verteilen kann.

Gemäß einer Weiterbildung kann in dem Hohlraum ein schwammartiges Material vorhanden sein, z.B. ein Schaumstoff, das wenigstens einen Teil des Hohlraums ausfüllt und den zumindest einen Kanal überdeckt. Mit "schwammartig" ist hier eine gewisse Saugfähigkeit bzw. die generelle Eignung zur Flüssigkeitsaufnahme und -speicherung gemeint. Es versteht sich, dass anstelle von Schaumstoff auch andere Materialien mit vergleichbaren Eigenschaften zum Einsatz kommen können. Auch ein Zwischenraum zwischen dem Kragen und der Hauptdichtlippe kann zumindest teilweise mit einem schwammartigen Material ausgefüllt sein. In dem Hohlraum des Wellendichtrings befindliches Schmiermittel fließt aufgrund des Vorhandenseins des schwammartigen Materials nicht sofort zu den Dichtflächen des Wellendichtrings ab, sondern wird von dem schwammartigen Material zunächst aufgenommen und erst allmählich wieder abgegeben und gleichmäßig an den Dichtflächen des Wellendichtrings auf dem radial äußeren bzw. radial inneren Körper verteilt. Um das Leiten von Schmiermittel aus dem Hohlraum des einen Wellendichtrings in den Hohlraum des anderen Wellendichtrings zu ermöglichen, können die Hohlräume der beiden Wellendichtringe auch durch wenigstens eine Leitung miteinander verbunden sein. In einem Hohlraum befindliches Schmiermittel kann sich so auf beide Hohlräume verteilen.

Für eine detailliertere Beschreibung dieser besonderen Ausführungsformen sowie weiterer möglicher Ausführungsformen der jeweils ersten Variante der ersten und zweiten Fahrzeugachsbaugruppe im Bereich der ringförmigen Kammer wird auf die internationale Patentanmeldung mit der Anmeldenummer PCT/EP2013/069599 verwiesen. Im Unterschied zur obigen Darstellung sind die in dieser Anmeldung beschriebenen Wellendichtringe allerdings unmittelbar zwischen dem Achskörper und der Nabe angeordnet. Die Ausführungen in der erwähnten internationalen Anmeldung lassen sich aber analog auf die obige Darstellung übertragen, indem an die Stelle der dort beschriebenen Nabe der "radial äußere Körper" und an die Stelle des dort beschriebenen Achskörpers der "radial innere Körper" tritt.

Im Folgenden wird auf Merkmale Bezug genommen, die besondere Ausführungsformen im Bereich der ringförmigen Kammer der jeweils zweiten Variante der ersten und zweiten Fahrzeugachsbaugruppe beschreiben, insbesondere hinsichtlich möglicher Ausgestaltungen des Wellendichtrings.

Der an dem Wellendichtring vorhandene Druckmitteleinlass kann in einer beliebigen Außenwand des Grundkörpers des Wellendichtrings angeordnet sein, beispielsweise in einer seitlichen Außenwand oder in der Außenwand, welche die in Umfangsrichtung verlaufende Dichtfläche des Wellendichtrings bildet. Ist der Einlass in der letztgenannten Außenwand gebildet, so kann die sich durch den Wellendichtring erstreckende erste bzw. zweite Druckmittelleitung innerhalb des radial inneren bzw. radial äußeren Körpers ausgebildet sein, etwa durch eine in dem Körper eingebrachte Bohrung, deren Austrittsöffnung mit dem Einlass des Wellendichtrings in Deckung gebracht ist. Ist der Einlass dagegen in einer seitlichen Außenwand des Grundkörpers gebildet, so kann die Druckmittelleitung außerhalb am radial inneren bzw. radial äußeren Körper geführt sein, um mit dem in der seitlichen Außenwand vorhandenen Druckmitteleinlass verbunden zu werden.

Die zwischen dem Druckmitteleinlass und dem Druckmittelauslass in dem Wellendichtring vorhandene, fluidleitende Verbindung kann durch einen in dem Material des Grundkörpers ausgebildeten Kanal realisiert sein, der den Einlass mit dem Auslass verbindet. Auch denkbar ist, eine rohrförmige Leitung von dem Einlass zum Auslass zu führen. Ist der Einlass des Wellendichtrings in einer seitlichen Außenwand des Grundkörpers gebildet, so kann sich eine rohrförmige Leitung auch über die seitliche Außenwand des Wellendichtrings hinaus erstrecken und einen zur Verbindung mit der am radial inneren bzw. radial äußeren Körper vorhandenen Druckmittelleitung geeigneten Anschluss aufweisen.

Um einem übermäßigen axialen Auseinanderbewegen der beiden den äußeren Hohlraum des Wellendichtrings begrenzenden Umfangsdichtlippen bei einem Überdruck in der ringförmigen Kammer zu begegnen, kann auf der mit den Umfangsdichtlippen in Kontakt stehenden Mantelfläche des radial inneren bzw. radial äußeren Körpers gegenüber wenigstens einer der Umfangsdichtlippen eine Ringnut vorhanden sein, in die die Umfangsdichtlippe radial hineinragt. Auch kann auf der mit den Umfangsdichtlippen in Kontakt stehenden Mantelfläche des radial inneren bzw. radial äußeren Körpers eine sich in Umfangsrichtung erstreckende Rippe vorhanden sein, an der sich wenigstens einer der Umfangsdichtlippen zumindest bei einem Überdruck in der Kammer axial abstützt. Ein axiales Auseinanderbewegen der beiden Wellendichtringe kann auch dadurch unterbunden werden, dass die beiden Wellendichtringe axial starr miteinander gekoppelt sind, beispielsweise durch Anbringen eines oder mehrerer starrer Verbindungselemente zwischen den beiden Umfangsdichtlippen.

Gemäß einer vorteilhaften Ausgestaltung kann der Grundkörper des Wellendichtrings einen inneren Hohlraum aufweisen, der von dem äußeren Hohlraum druckdicht getrennt ist. Diese Trennung kann beispielsweise durch eine den inneren vom äußeren Hohlraum trennende Wand realisiert sein, die entweder aus dem Grundkörpermaterial selbst gebildet ist, d.h. einstückig mit dem Grundkörper ausgeführt ist, oder durch ein separates in dem Grundkörper befestigtes, ringförmiges Trennelement. Der innere Hohlraum kann ein Schmiermittel enthalten, welches zur permanenten Schmierung der dynamisch beanspruchten Gleitflächen der Umfangsdichtlippen des Wellendichtrings verwendet werden kann. Um in dem inneren Hohlraum befindliches Schmiermittel zu den Gleitflächen der Umfangsdichtlippen zu führen kann sich zumindest ein Schmiermittelkanal aus dem inneren Hohlraum in mindestens eine der Umfangsdichtlippen erstrecken und an der Gleitfläche der betreffenden Umfangsdichtlippe münden.

Um die Dichtwirkung des Wellendichtrings im Bereich der ringförmigen Kammer zu verbessern, kann benachbart zu mindestens einer der den äußeren Hohlraum des Wellendichtrings begrenzenden Umfangsdichtlippen eine weitere sich radial erstreckende Umfangsdichtlippe vorhanden sein, wobei zwischen einer den äußeren Hohlraum begrenzenden Umfangsdichtlippe und einer weiteren, benachbarten Umfangsdichtlippe ein ringförmiger Zwischenraum vorhanden ist. Bei einer solchen Ausgestaltung kann sich zumindest ein Schmiermittelkanal aus dem inneren Hohlraum in den Zwischenraum zwischen zwei benachbarten Umfangsdichtlippen erstrecken. In dem inneren Hohlraum vorhandenes Schmiermittel kann dann über den Schmiermittelkanal in den Zwischenraum zwischen den betreffenden, benachbarten Umfangsdichtlippen gelangen und dort die Gleitflächen der Umfangsdichtlippen schmieren.

Um ein zur Vorhaltung von Schmiermittel geeignetes Schmiermitteldepot zu bilden, kann der innere Hohlraum des Wellendichtrings nach außen, insbesondere zur Seite hin abgedichtet sein. In einer anderen Ausgestaltung kann eine seitliche Außenwand des Wellendichtrings mit wenigstens einer Schmiermitteleintrittsöffnung versehen sein, die in den inneren Hohlraum führt. Auch kann der Zwischenraum zwischen benachbarten Umfangsdichtlippen zumindest teilweise mit einem schwammartigen Schaumstoff ausgefüllt sein. Ebenso kann in dem inneren Hohlraum ein schwammartiger Schaumstoff vorhanden sein, der wenigstens einen Teil des inneren Hohlraums ausfüllt und eine Eintrittsöffnung des zumindest einem Schmiermittelkanals überdeckt.

Gemäß einer weiteren Ausführungsform kann ein im Grundkörper aufgenommener, den Grundkörper versteifender Kern in einen Bereich verlängert sein, von dem sich wenigstens eine Umfangsdichtlippe erstreckt. Der versteifende Kern kann auch in wenigstens eine Umfangsdichtlippe hinein verlängert sein. In einer Weiterbildung kann ein in einer der Umfangsdichtlippen vorhandener Abschnitt des Kerns bezüglich des übrigen Kerns schwenkbar sein bzw. zum übrigen Kern gelenkig angeordnet sein.

Für eine detailliertere Beschreibung dieser besonderen Ausführungsformen sowie weiterer möglicher Ausführungsformen der jeweils zweiten Variante der ersten und zweiten Fahrzeugachsbaugruppe im Bereich der ringförmigen Kammer wird auf die deutsche Patentanmeldung mit der Anmeldenummer 10 2013 017 879.7 verwiesen. Im Unterschied zur obigen Darstellung ist der in jener Anmeldung beschriebene Wellendichtring allerdings unmittelbar zwischen dem Achskörper und der Nabe angeordnet. Die Ausführungen in der erwähnten deutschen Anmeldung lassen sich aber analog auf die obige Darstellung übertragen, indem an die Stelle der dort beschriebenen Nabe der "radial äußere Körper" und an die Stelle des dort beschriebenen Achskörpers der "radial innere Körper" tritt.

Im Folgenden wird auf Merkmale Bezug genommen, die besondere Ausführungsformen im Bereich der ringförmigen Kammer der jeweils dritten Variante der ersten und zweiten Fahrzeugachsbaugruppe beschreiben, insbesondere hinsichtlich möglicher Ausgestaltungen des im Ringprofil angeordneten Dichtrings.

Wiederum entsteht bei einer Druckmittelzuführung in der ringförmigen Kammer ein Überdruck, der hier danach trachtet, den Dichtring axial aus dem Ringprofil herauszudrücken. Um einem solchen Herausdrücken des Dichtrings entgegenzuwirken, kann eine Halterung vorgesehen sein, die bei axial verlaufenden Seitenwänden des Ringprofils die axiale Position des Dichtrings und bei radial verlaufenden Seitenwänden des Ringprofils die radiale Position des Dichtrings fixiert. Auch kann eine Abstützung an dem Ringprofil vorgesehen sein, etwa in Gestalt einer Umfangsrippe, die an einer Seitenwand oder an beiden Seitenwänden des Ringprofils ausgebildet ist. Ferner kann der Dichtring benachbart zur der ringförmigen Kammer bei axial verlaufenden Seitenwänden des Ringprofils radial innen und radial außen bzw. bei radial verlaufenden Seitenwänden des Ringprofils axial innen und axial außen mit einem Kragen versehen sein, welcher zumindest bei einem Überdruck in der Kammer gegen die Seitenwände des Ringprofils gedrückt wird und durch die so entstehende Reibkraft bei axial verlaufenden Seitenwänden zu einer axialen Fixierung des Dichtrings bzw. bei radial verlaufenden Seitenwänden zu einer radialen Fixierung des Dichtrings beiträgt. Im Falle axial verlaufender Seitenwände des Ringprofils kann der radial innere und der radial äußere Kragen sich auf formschlüssig in der ringförmigen Kammer axial abstützen und im Fall radial verlaufender Seitenwände des Ringprofils kann sich der axial innere und der axial äußere Kragen formschlüssig in der ringförmigen Kammer radial abstützen, beispielsweise an einer Stützstruktur, die innen an den Seitenwänden des Ringprofils vorhanden ist. Eine solche Stützstruktur kann analog zu den zuvor beschriebenen Varianten ausgeführt sein, z.B. als Nut oder als Rippe, an der sich der jeweilige Kragen zumindest beim Überdruck in der ringförmigen Kammer abstützen kann.

Der Dichtring kann, insbesondere im Bereich wenigstens eines der beiden Kragen, einen Kern aus einem den Dichtring versteifenden Material aufweisen und ein im Bereich eines Kragens vorhandener Abschnitt des Kerns kann relativ zum restlichen Kern schwenkbar sein bzw. gelenkig zu diesem angeordnet sein. Ferner kann der Dichtring zumindest einen Kanal aufweisen, der sich aus einem inneren Hohlraum des Dichtrings bei einem Ringprofil mit axial verlaufenden Seitenwänden in im Wesentlichen radialer Richtung bzw. bei einem Ringprofil mit radial verlaufenden Seitenwänden in im Wesentlichen axialer Richtung zu einem in einem Bereich zwischen einem Kragen und einer Hauptdichtlippe des Dichtrings liegenden Umfangsabschnitt des Dichtrings erstreckt. Ferner kann der Hohlraum auf der von der ringförmigen Kammer abgewandten Seite des Dichtrings mit einer Abdeckung versehen sein, und der so abgedichtete Hohlraum mit einem Schmiermittel befüllt sein, welches nach und nach zur Schmierung der Dichtflächen des Dichtrings abgegeben werden kann. Zudem kann in dem Hohlraum ein schwammartiger Schaumstoff vorhanden sein, der wenigstens einen Teil des Hohlraums ausfüllt und den zumindest einen Kanal überdeckt. Ebenso kann ein Zwischenraum zwischen dem Kragen und der Hauptdichtlippe zumindest teilweise mit einem schwammartigen Schaumstoff ausgefüllt sein.

Für eine detailliertere Beschreibung dieser besonderen Ausführungsformen sowie weiterer möglicher Ausführungsformen der jeweils dritten Variante der ersten und zweiten Fahrzeugachsbaugruppe im Bereich der ringförmigen Kammer wird nochmals auf die internationale Patentanmeldung mit der Anmeldenummer PCT/EP2013/069599 verwiesen. Im Unterschied zur obigen Darstellung ist das in jener internationalen Anmeldung beschriebene Ringprofil allerdings unmittelbar mit der Nabe verbunden. Die Ausführungen in der internationalen Anmeldung lassen sich aber analog auf die obige Darstellung übertragen, indem an die Stelle der Nabe die Abdeckung bzw. der an der Abdeckung gebildete Vorsprung tritt.

Mehrere Ausführungsbeispiele einer erfindungsgemäßen Fahrzeugachsbaugruppe werden im Folgenden unter Bezugnahme auf die beigefügten, schematischen Zeichnungen näher erläutert. Es zeigt:
- Figur 1: eine perspektivische Schnittansicht einer bekannten Fahrzeugachsbaugruppe;
- Figur 2: ein Ausführungsbeispiel der ersten Fahrzeugachsbaugruppe, bei dem die zweite Druckmittelleitung axial außerhalb des Flansches geführt ist;
- Figur 3: ein Ausführungsbeispiel der ersten Fahrzeugachsbaugruppe, bei dem die zweite Druckmittelleitung durch den Flansch bis zu seiner Außenumfangsfläche geführt ist;
- Figur 4: ein Ausführungsbeispiel der ersten Fahrzeugachsbaugruppe, bei dem die zweite Druckmittelleitung durch eine Schraube geführt ist;
- Figur 5: ein Ausführungsbeispiel der ersten Fahrzeugachsbaugruppe, bei dem die zweite Druckmittelleitung axial innerhalb des Flansches geführt ist;
- Figur 6: ein Ausführungsbeispiel der zweiten Fahrzeugachsbaugruppe, bei dem ein hohlzylindrischer Endabschnitt des Achskörpers einen zylindrischen Vorsprung der Abdeckung umschließt;
- Figur 7: ein Ausführungsbeispiel der zweiten Fahrzeugachsbaugruppe, bei dem ein hohlzylindrischer Vorsprung der Abdeckung einen zylindrischen Endabschnitt des Achskörpers umschließt;
- Figur 8: ein Ausführungsbeispiel der zweiten Fahrzeugachsbaugruppe, bei dem ein Ringprofil mit U-förmigem Querschnitt an einer axialen Innenseite der Abdeckung gebildet ist;
- Figur 9: ein Ausführungsbeispiel der zweiten Fahrzeugachsbaugruppe, bei dem die zweite Druckmittelleitung axial außerhalb des Flansches geführt ist;
- Figur 10: ein Ausführungsbeispiel der zweiten Fahrzeugachsbaugruppe, bei dem die zweite Druckmittelleitung durch den Flansch bis zu seiner Außenumfangsfläche geführt ist;
- Figur 11: ein Ausführungsbeispiel der zweiten Fahrzeugachsbaugruppe, bei dem die zweite Druckmittelleitung axial innerhalb des Flansches geführt ist.
- Figur 12: eine Detailansicht eines Ausführungsbeispiels der ersten Variante der ersten und zweiten Fahrzeugachsbaugruppe mit einer durch zwei Wellendichtringe begrenzten ringförmigen Kammer;
- Figur 13: eine Detailansicht eines Ausführungsbeispiels der zweiten Variante der ersten und zweiten Fahrzeugachsbaugruppe mit einer zwischen den Umfangsdichtlippen eines Wellendichtrings gebildeten ringförmigen Kammer; und
- Figur 14: eine Detailansicht eines Ausführungsbeispiels der dritten Variante der ersten und zweiten Fahrzeugachsbaugruppe mit einer durch einen in einem Ringprofil mit U-förmigem Querschnitt angeordneten Dichtring gebildeten ringförmigen Kammer;

In der folgenden Beschreibung von Ausführungsbeispielen werden gleiche Bezugszeichen verwendet, um gleiche oder gleichwirkende Elemente zu bezeichnen.

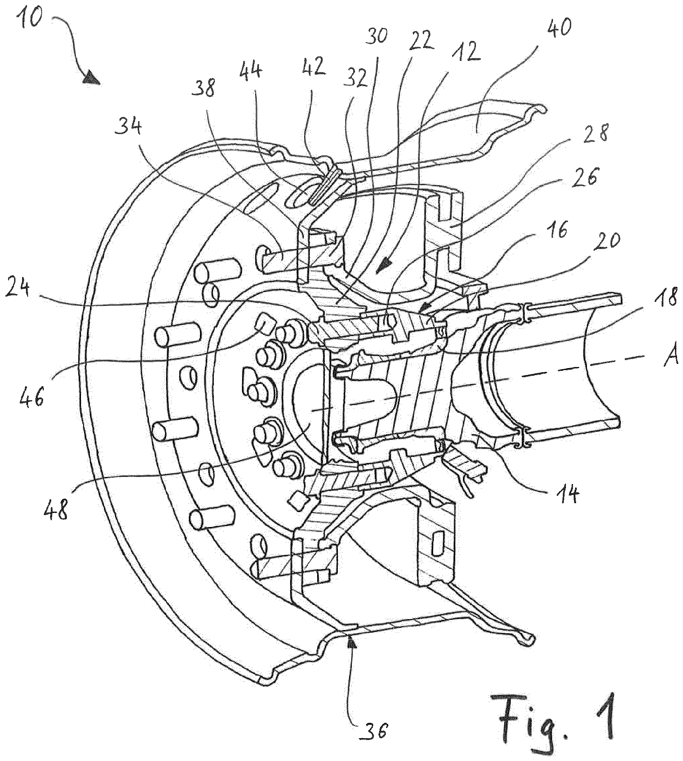

Die Figur 1 zeigt in einer perspektivischen Schnittansicht beispielhaft eine Fahrzeugachsbaugruppe 10, wie sie etwa für Anhänger von Last- und Nutzfahrzeugen zum Einsatz kommt. Die Fahrzeugachsbaugruppe 10 umfasst eine Nabe 12, die um eine Mittellängsachse A an einem zylindrischen Achskörper 14 durch ein Kugellager 16 drehbar gelagert ist. Das Kugellager 16 weist einen mit dem Achskörper 14 verbundenen inneren Laufring 18 und einen äußeren Laufring 20 auf, der in diesem Beispiel einen Teil der Nabe 12 bildet. Ein Flansch 22 ist an dem äußeren Laufring 20 mittels einer Vielzahl von Schrauben 24 befestigt, die in Gewindebohrungen 26 aufgenommen sind, die sich in axialer Richtung durch den Flansch 22 bis in den äußeren Laufring 20 erstrecken. Im gezeigten Beispiel ist der Flansch 22 axial außerhalb des äußeren Laufrings 20 angeordnet und liegt mit einer axialen Innenseite an einer axialen Außenseite des äußeren Laufrings 20 an. Neben dem äußeren Laufring 20 bildet auch der Flansch 22 einen Teil der Nabe 12.

An einer axialen Innenseite des Flansches 22 im Bereich seiner Außenumfangsfläche ist eine Bremsscheibe 28 über eine als Kragen ausgebildete Halterung 30 montiert. Zur Montage der Halterung 30 werden Schrauben 32 verwendet, die sich von der axialen Innenseite des Flansches 22 durch diesen hindurch erstrecken und über diesen auf dessen axialer Außenseite hinausstehen. Diese Überstande der Schrauben 32 dienen zugleich als Bolzen 34, mittels welcher ein Rad 36 mit einer Radschüssel 38 an dem Flansch 22 befestigt ist. Die Radschüssel 38 ist dabei auf die Bolzen 34 aufgeschoben und liegt mit ihrer axialen Innenseite flächig an einer axialen Außenseite des Flansches 22 an. An der Radschüssel 38 ist eine Felge 40 befestigt, an der ein Ventil 42 vorhanden ist, über welches ein auf der Felge 40 montierter (nicht dargestellter) Reifen mit Luft befüllt werden kann. Das Ventil 42 ist axial außerhalb der Radschüssel 38 angeordnet.

An der Radschüssel 38 sind in Umfangsrichtung gleichmäßig verteilt angeordnete Durchgangslöcher 44 gebildet, die sich von einer axialen Innenseite zu einer axialen Außenseite der Radschüssel erstrecken. In gleicher Weise sind an dem Flansch 22 in Umfangsrichtung gleichmäßig verteilt angeordnete Durchgangslöcher 46 gebildet, die sich von einer axialen Innenseite bis zu einer axialen Außenseite des Flansches 22 erstrecken. Schließlich ist an dem Flansch 22 radial innenseitig eine Abdeckung 48 angebracht, die ein axiales Ende des Achskörpers 14 überdeckt und somit den Achskörper 14 gegen äußerliche Umwelteinflüsse abschirmt. Die Abdeckung 48 bildet ebenso wie der Flansch 22 und der äußere Laufring 20 einen Teil der Nabe 12 und dreht sich bei einer Drehung der Nabe 12 um den Achskörper 14 mit dieser mit.

Die im folgenden beschriebenen Ausführungsbeispiele gehen von der in der Figur 1 dargestellten Fahrzeugachsbaugruppe 10 aus und modifizieren diese, um eine autonome Druckmittelzuführung von einer im Fahrzeug vorhandenen Druckmittelquelle in den auf dem Rad 36 montierten (nicht dargestellten) Reifen zu ermöglichen.

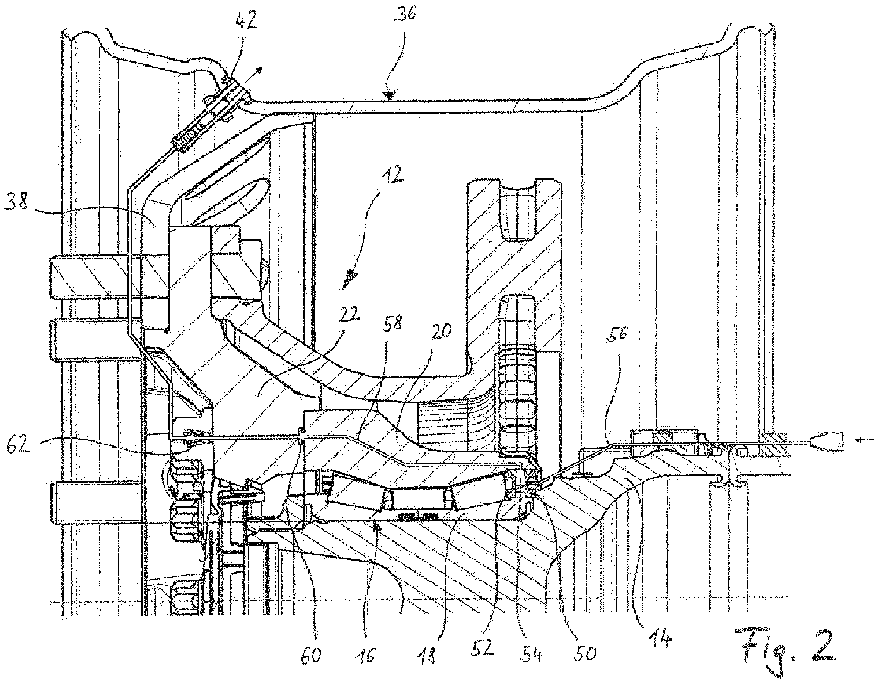

Die Figuren 2 bis 5 veranschaulichen in dieser Hinsicht mögliche Ausführungsbeispiele der eingangs beschriebenen ersten Fahrzeugachsbaugruppe.

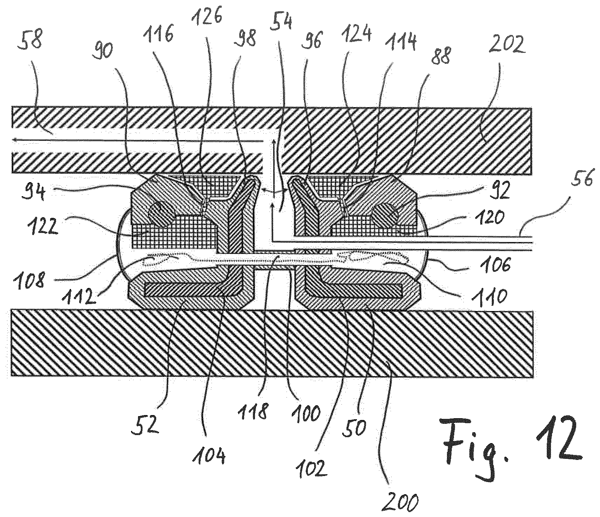

Die Figur 2 zeigt ein erstes Ausführungsbeispiel der ersten Fahrzeugachsbaugruppe in der ersten Variante. In diesem Beispiel sind im Bereich des axial inneren Ende des Kugellagers 16 zwischen dem inneren Laufring 18 und dem äußeren Laufring 20 ein axial innerer Wellendichtring 50 und ein axial äußerer Wellendichtring 52 abdichtend angeordnet und begrenzen zwischen sich, der äußeren Mantelfläche des inneren Laufrings 18 und der inneren Mantelfläche des äußeren Laufrings 20 eine zur Druckmittelweiterleitung geeignete ringförmige Kammer 54. Die beiden Wellendichtringe 50 und 52 bilden darüber hinaus eine abdichtende Außenhaut für das Kugellager16, die ein Eindringen von Staub und Schmutzpartikeln in das Kugellager 16 sowie einen Austritt von Schmiermitteln aus dem Kugellager verhindert. Aus Platzgründen ist hier der Bereich der ringförmigen Kammer 54 mit den Wellendichtringen 50 und 52 nur vereinfacht und nicht detailgetreu dargestellt. Eine mögliche detaillierte Ausgestaltung dieses Bereichs wird später anhand der Figur 12 näher beschrieben.

Entlang des Achskörpers 14 erstreckt sich eine erste Druckmittelleitung 56 ausgehend von einer (nicht dargestellten) im Fahrzeug vorhandenen Druckmittelquelle, die beispielsweise ein Kompressor zur Erzeugung von Druckluft oder ein Behälter mit unter Druck stehendem Reifenfüllmittel sein kann. Die erste Druckmittelleitung 56 erstreckt sich durch den axial inneren Wellendichtring 50, um in die ringförmige Kammer 54 zu münden. Der hier gezeigte Verlauf der ersten Druckmittelleitung 56 ist freilich nur beispielhaft. Es versteht sich, dass die erste Druckmittelleitung 56 zumindest streckenweise auch durch den Achskörper 14 geführt sein kann und insbesondere durch den inneren Laufring 18 geführt sein kann, um durch den inneren Laufring 18 in die ringförmige Kammer 54 zu münden.

Aus der ringförmigen Kammer 54 heraus verläuft eine zweite Druckmittelleitung 58, die an ihrem kammerfernen Ende zur Verbindung mit dem am Rad 36 vorhandenen Ventil 42 ausgestaltet ist. Im gezeigten Beispiel erstreckt sich die zweite Druckmittelleitung 58 durch den äußeren Laufring 20 in im Wesentlichen axialer Richtung bis zu dessen axialer Außenseite und geht dann in den an dem äußeren Laufring 20 befestigten Flansch 22 über. Um einen druckdichten Übergang der zweiten Druckmittelleitung 58 zwischen dem äußeren Laufring 20 und dem Flansch 22 zu gewährleisten, ist an der der axialen Außenseite des äußeren Laufrings 20 anliegenden Seite des Flansches 22 eine Ausnehmung 60 vorhanden, in der ein Dichtring angeordnet ist, beispielsweise ein O-Ring, der beim Montieren des Flansches 22 an dem äußeren Laufring 20 in der Ausnehmung 60 zusammengepresst wird und die zweite Druckmittelleitung 58 abdichtet. Die zweite Druckmittelleitung 58 erstreckt sich anschließend durch den Flansch 22 in im Wesentlichen axialer Richtung bis zu einem Druckmittelleitungsanschluss 62, der an einer axialen Außenseite des Flansches 22 vorhanden ist. Die Führung der zweiten Druckmittelleitung 58 durch den äußeren Laufring 20 und den Flansch 22 kann beispielsweise durch in diese Bauteile eingebrachte Bohrungen realisiert sein. Es versteht sich jedoch, dass die Bauteile auch als Gussteile mit entsprechend ausgebildeten Leitungen hergestellt sein können.

Von dem Druckmittelleitungsanschluss 62 erstreckt sich die zweite Druckmittelleitung 58 in ihrem weiteren Verlauf als Rohrleitung in im Wesentlichen radialer Richtung entlang der axialen Außenseite des Flansches 22 und axial außerhalb der Radschüssel 38 und ist schließlich mit dem Ventil 42 verbunden. Der Druckmittelleitungsanschluss 62 kann vorteilhafterweise mit einer für einen Benutzer leicht handhabbare Verschlusstechnik, gegebenenfalls mit einer Einrastfunktion, realisiert sein.

Durch die in der Figur 2 beschriebene Anordnung der ersten Druckmittelleitung 56, der ringförmigen Kammer 54 und der zweiten Druckmittelleitung 58 und ist eine Druckmittelweiterleitung von einer fahrzeugfesten Druckmittelquelle zu dem sich drehenden Rad 36 möglich. Während der Achskörper 14 und die erste Druckmittelleitung 56 feststehend sind, so drehen sich während der Fahrt die Nabe 12 und die mit der Nabe 12 verbundenen Komponenten, also insbesondere die zweite Druckmittelleitung 58, welche im Verlauf der Drehung über die ringförmige Kammer 54 immer fluidleitend mit der ersten Druckmittelleitung 56 gekoppelt ist. Da diese Kopplung unabhängig von der jeweiligen Drehstellung der Nabe 12 ist, kann eine Druckmittelzufuhr oder -abfuhr nicht nur im Stillstand, sondern auch während der Fahrt bei sich drehender Nabe 12 erfolgen. Mit der beschriebenen Anordnung kann eine Reifendruckregulierung daher ohne weiteres automatisiert werden.

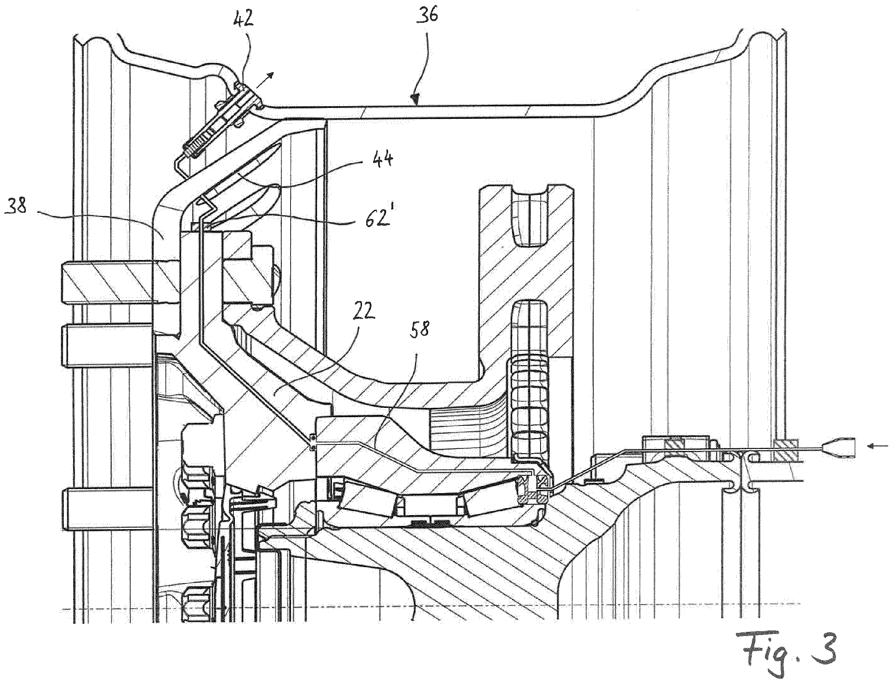

Die Figur 3 zeigt ein anderes Ausführungsbeispiel der ersten Fahrzeugachsbaugruppe in der ersten Variante. Dieses Beispiel gleicht im Wesentlichen dem Beispiel der Figur 2, unterscheidet sich von diesem aber dadurch, dass die zweite Druckmittelleitung 58 durch den Flansch 22 nicht bis zu einem Druckmittelleitungsanschluss 62 geführt ist, der an einer axialen Außenseite des Flansches 22 vorgesehen ist, sondern zu einem Druckmittelleitungsanschluss 62', der an einer Außenumfangsfläche des Flansches 22 vorhanden ist. Dieser in der Darstellung der Figur 3 lediglich schematisch angedeutete Druckmittelleitungsanschluss 62' an der Außenumfangsfläche des Flansches 22 kann ein lösbarer Anschluss mit einem Ventil sein (nicht dargestellt), welches die zweite Druckmittelleitung 58 automatisch verschließt, sobald der zum Rad 36 führende Teil der Druckmittelleitung 58 vom Druckmittelleitungsanschluss 62' getrennt wird. Vom dem Druckmittelleitungsanschluss 62' erstreckt sich die zweite Druckmittelleitung 58 als Schlauch- oder Rohrleitung in im Wesentlichen radialer Richtung und ist zunächst axial innerhalb der Radschüssel 38 geführt, erstreckt sich anschließend durch ein in der Radschüssel 38 gebildetes Durchgangsloch 44 und verläuft dann axial außerhalb der Radschüssel 38 bis zur Verbindung mit dem am Rad 36 vorhandenen Ventil 42. Ein Vorteil dieser Variante ist, dass die zweite Druckmittelleitung 58 auf einem wesentlichen Teil ihrer Strecke vor äußerlichen Umwelteinflüssen geschützt geführt ist.

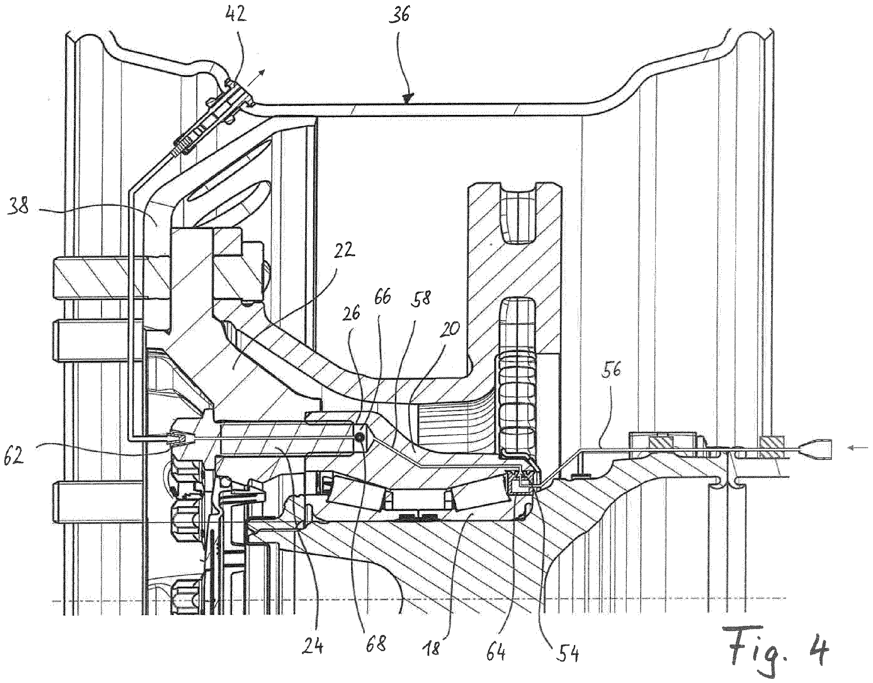

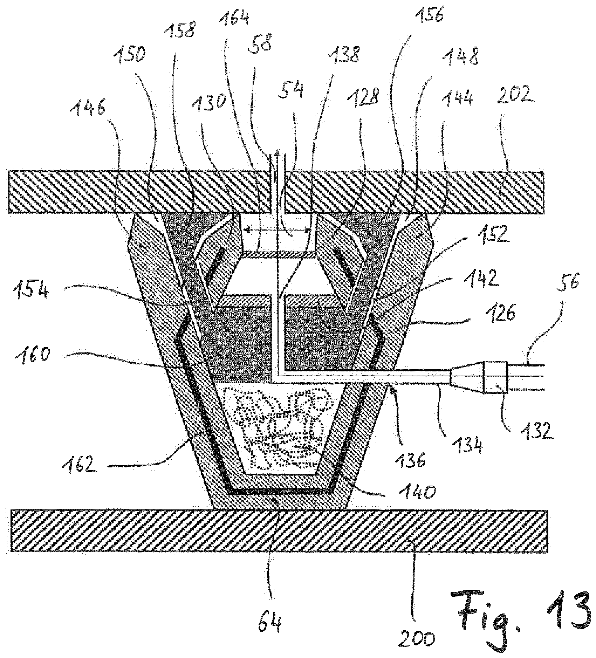

Die Figur 4 zeigt ein weiteres Ausführungsbeispiel, bei dem die zur Druckmittelleitung geeignete Kopplung gemäß der zweiten Variante der ersten Fahrzeugachsbaugruppe ausgeführt ist. Die ringförmige Kammer 54 wird hier durch einen Wellendichtring 64 hergestellt, dessen Umfangsdichtlippen an seiner äußeren Mantelfläche gebildet sind. Der Wellendichtring ist zwischen den beiden Laufringen 18 und 20 abdichtend angeordnet, so dass die ringförmige Kammer 54 zwischen seiner äußeren Mantelfläche, zwei seiner Umfangsdichtlippen und der inneren Mantelfläche des äußeren Laufrings 20 begrenzt ist. Die erste Druckmittelleitung 56 erstreckt sich durch den Wellendichtring 64, um in die ringförmige Kammer 54 zu münden. Die zweite Druckmittelleitung erstreckt sich aus der ringförmigen Kammer heraus durch den äußeren Laufring 20. Auch hier ist der Bereich der ringförmigen Kammer 54 mit dem Wellendichtring 64 aus Platzgründen nur vereinfacht und nicht detailgetreu dargestellt. Eine mögliche detaillierte Ausgestaltung dieses Bereichs wird später anhand der Figur 13 näher beschrieben.

In ihrem weiteren Verlauf ist die zweite Druckmittelleitung 58 bis an den Grund einer Bohrung 26 geführt in der eine Druckmittelleitungsschraube 24 aufgenommen ist. Die Länge der Druckmittelleitungsschraube 24 ist so bemessen, dass sie nicht ganz bis zum Grund der Bohrung 26 reicht, so dass am Grund der Bohrung 26 ein zur Druckmittelleitung geeigneter Hohlraum 66 gebildet ist. Die Druckmittelleitungsschraube 24 selbst weist eine Bohrung auf, die sich von ihrer Spitze bis zu ihrem Kopf erstreckt. Am Kopf der Schraube 24 ist ein Druckmittelleitungsanschluss 62 vorhanden. Ausgehend von dem Druckmittelleitungsanschluss 62 ist die zweite Druckmittelleitung 58 axial außerhalb des Flansches 22 und der Radschüssel 38 in im Wesentlichen radialer Richtung bis zur Verbindung mit dem Ventil 42 am Rad 36 geführt.

In der Darstellung der Figur 4 ist darüber hinaus im Bereich des Hohlraums 66 am Grund der Bohrung 26 ein sich in Zeichnungstiefe der Figur 4 erstreckender Ringkanal 68 angedeutet, der in Umfangsrichtung des äußeren Laufrings 20 durch den äußeren Laufring 20 geführt ist und sämtliche Bohrungen 26 aller Schrauben 24, mittels welcher der Flansch 22 an dem äußeren Laufring 20 befestigt ist, fluidleitend miteinander verbindet. Eine derartige fluidleitende Verbindung der einzelnen Bohrungen 26 hat den Vorteil, dass es bei der Montage des Flansches 22 an dem äußeren Laufring 20 nicht darauf ankommt, dass die Druckmittelleitungsschraube 24 in genau diejenige Bohrung 26 geschraubt wird, an deren Grund die zweite Druckmittelleitung 58 mündet. Durch die fluidleitende Verbindung der Hohlräume 66 kann die Druckmittelleitungsschraube 24 in eine beliebige Bohrung 26 geschraubt werden, wobei eine Druckmittelzuführung in die Schraube 24 über die miteinander verbundenen Hohlräume 66 zu jeder Zeit gewährleistet ist.

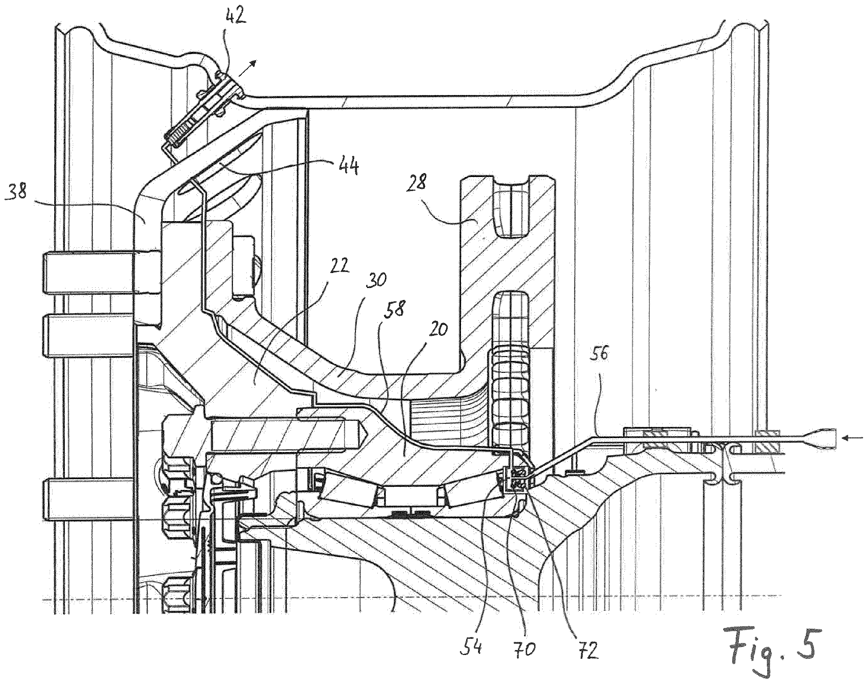

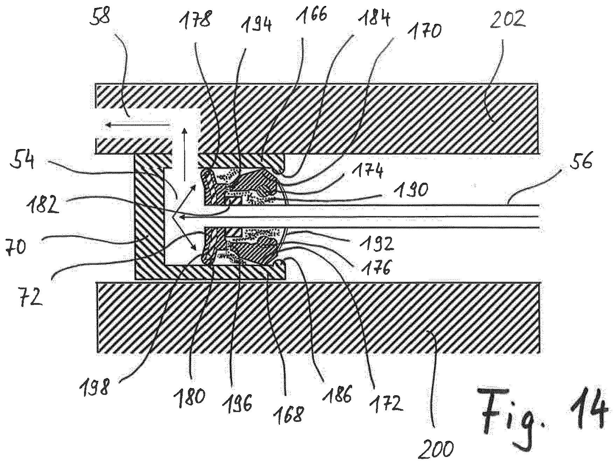

Die Figur 5 zeigt ein weiteres Ausführungsbeispiel, bei dem die zur Druckmittelleitung geeignete Kopplung gemäß der dritten Variante der ersten Fahrzeugachsbaugruppe ausgeführt ist. Die ringförmige Kammer 54 ist hier zwischen den axial verlaufenden Seitenwänden eines mit der inneren Mantelfläche des äußeren Laufrings 20 verbundenen Ringprofils 70 mit U-förmigem Querschnitt und einem bezüglich des inneren Laufrings 18 drehfesten Dichtring 72 begrenzt. Die erste Druckmittelleitung 56 erstreckt sich durch den Dichtring 72 in die ringförmige Kammer 54 und die zweite Druckmittelleitung 58 erstreckt sich aus der ringförmigen Kammer 54 durch das Ringprofil 70 und den äußeren Laufring 20. Auch hier ist der Bereich der ringförmigen Kammer 54 mit dem Ringprofil 70 und dem Dichtring 72 aus Platzgründen nur vereinfacht und nicht detailgetreu dargestellt. Eine mögliche detaillierte Ausgestaltung dieses Bereichs wird später anhand der Figur 14 näher beschrieben.

In dem hier dargestellten Ausführungsbeispiel erstreckt sich die zweite Druckmittelleitung 58 von der ringförmigen Kammer 54 in radialer Richtung zu der äußeren Mantelfläche des äußeren Laufrings 20. Von dort aus ist die zweite Druckmittelleitung 58 als Rohrleitung entlang der äußeren Mantelfläche des äußeren Laufrings 20 bis zu dem Flansch 22 und dann entlang einer axialen Innenseite des Flansches 22 bis zu einer Außenumfangsfläche des Flansches 22 geführt. Vorteilhafterweise kann die zweite Druckmittelleitung 58 auf ihrer Teilstrecke entlang der äußeren Mantelfläche des äußeren Laufrings 20 sowie entlang der axialen Innenseite des Flansches 22 in einer in diesen Bauteilen gebildeten Ausnehmung angeordnet sein. Die zweite Druckmittelleitung 58 kann beispielsweise mit halbem Umfang in der Ausnehmung versenkt sein. In dem Bereich der axialen Innenseite des Flansches 22, an dem die Halterung 30 der Bremsscheibe 28 anliegt, kann zusätzlich eine Ausnehmung an der am Flansch 22 anliegenden Fläche der Halterung 30 gebildet sein, so dass die Druckmittelleitung 58 je hälftig in den Ausnehmungen des Flansches 22 und der Halterung 30 versenkt und somit zwischen diesen fixiert ist. Eine derartige Anordnung der zweiten Druckmittelleitung 58 entlang der axialen Innenseite des Flansches 22 ist besonders deshalb vorteilhaft, da sie sich einfach verlegen bzw. montieren lässt, beispielsweise durch einfaches Eindrücken in die Ausnehmung, und zudem in ihrer Position aufgrund der Führung zwischen dem Flansch 22 und der Halterung 30 fixiert ist. Außerdem ist die zweite Druckmittelleitung 58 auch in dieser Ausführungsform auf einem wesentlichen Teil ihrer Strecke vor äußerlichen Umwelteinflüssen geschützt.

Im gezeigten Beispiel ist an der Außenumfangsfläche des Flansches 22 kein Druckmittelleitungsanschluss vorgesehen, sondern die zweite Druckmittelleitung 58 stattdessen nahtlos in radialer Richtung durch ein in der Radschüssel 38 gebildetes Durchgangsloch 44 bis zur Verbindung mit dem Ventil 42 weitergeführt. Es versteht sich, dass an der Außenumfangsfläche des Flansches 22 auch ein geeigneter Druckmittelleitungsanschluss vorgesehen sein kann.

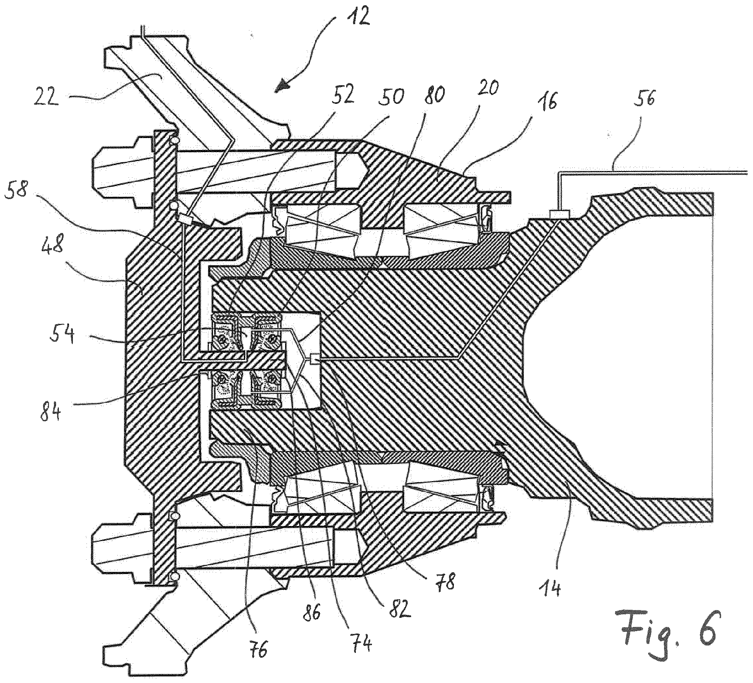

Die Figuren 6 bis 11 veranschaulichen im Folgenden mögliche Ausführungsbeispiele der eingangs beschriebenen zweiten Fahrzeugachsbaugruppe.

Die Figur 6 zeigt ein erstes Ausführungsbeispiel der zweiten Fahrzeugachsbaugruppe in der ersten Variante. In diesem Beispiel ist an einer axialen Innenseite der Abdeckung 48 ein zylindrischer Vorsprung 74 gebildet, der sich mit einem hohlzylindrischen Endabschnitt 76 des Achskörpers 14 axial überlappt und von diesem im Bereich der axialen Überlappung umschlossen wird. Zwischen dem Vorsprung 74 und dem Endabschnitt 76 sind ein axial innerer Wellendichtring 50 und ein axial äußerer Wellendichtring 52 abdichtend angeordnet und begrenzen zwischen sich, der äußeren Mantelfläche des Vorsprungs 74 und der inneren Mantelfläche des Endabschnitts 76 eine zur Druckmittelweiterleitung geeignete ringförmige Kammer 54. Aus Platzgründen ist hier der Bereich der ringförmigen Kammer 54 mit den Wellendichtringen 50 und 52 nur vereinfacht und nicht detailgetreu dargestellt. Eine mögliche detaillierte Ausgestaltung dieses Bereichs wird später anhand der Figur 12 näher beschrieben.

Eine erste Druckmittelleitung 56 erstreckt sich ausgehend von einer (nicht dargestellten) im Fahrzeug vorhandenen Druckmittelquelle, die beispielsweise ein Kompressor zur Erzeugung von Druckluft oder ein Behälter mit unter Druck stehendem Reifenfüllmittel sein kann, zunächst außerhalb des Achskörpers 14, um anschließend durch den Achskörper 14, beispielsweise in einer Bohrung, bis zu einem Druckmittelleitungsanschluss 78 geführt zu werden, der an einer axialen Außenseite des Achskörpers 14 vorgesehen ist, von welcher sich der hohlzylindrische Endabschnitt 76 axial nach außen erstreckt. Von diesem Druckmittelleitungsanschluss 78 ist die erste Druckmittelleitung 56 dann durch den axial inneren Wellendichtring 50 geführt, um in die ringförmige Kammer 54 zu münden. Bevor sich die erste Druckmittelleitung 56 allerdings durch den axial inneren Wellendichtring 50 erstreckt, spaltet sie sich zunächst in zwei Teilleitungen 80 und 82 auf, die ihrerseits durch den axial inneren Wellendichtring 50 in die ringförmige Kammer 54 münden. Der hier gezeigte Verlauf der ersten Druckmittelleitung 56 ist freilich nur beispielhaft. Es versteht sich, dass die erste Druckmittelleitung 56 auch auf anderem Wege zu dem Druckmittelleitungsanschluss 78 geführt sein kann. Auch versteht es sich, dass eine Spaltung der ersten Druckmittelleitung 56 in Teilleitungen lediglich optional ist.

Die Spaltung der ersten Druckmittelleitung 56 in die beiden Teilleitungen 80 und 82 ist aber vor allem deshalb von Vorteil, da die beiden Wellendichtringe 50 und 52 bei der Montage der Abdeckung 48 zusammen mit derselben in den Hohlraum des hohlzylindrischen Endabschnitts 76 leichter eingeführt werden können. Bei diesem Einführen ist der mit dem axial inneren Wellendichtring 50 verbundene Leitungsabschnitt der ersten Druckmittelleitung 56 mit dem Druckmittelleitungsanschluss 78 zu verbinden. Ist lediglich ein einzelner Leitungsabschnitt der ersten Druckmittelleitung 56 vorgesehen, ist dieser unter Umständen so labil, dass er nur mit Mühe mit dem Druckmittelleitungsanschluss 78 in Deckung gebracht werden kann. Sind dagegen, wie dargestellt, zwei Teilleitungen von dem Wellendichtring 50 ausgehend in Richtung des Druckmittelleitungsanschlusses 78 zusammengeführt, so stabilisieren sich diese gegenseitig und ermöglichen eine definierte Führung dieses Leitungsabschnitts bei der Montage der Abdeckung 48. Vorteilhafterweise kann eine Spaltung auch in mehr als zwei Teilleitungen, etwa drei oder vier Teilleitungen, vorgesehen sein, um ein in dieser Hinsicht noch stabileres Leitungsgebilde zu erhalten. Auch kann es aus Stabilitätsgründen zweckmäßig sein, die Teilleitungen an dem Wellendichtring 50 in dessen Umfangsrichtung gleichmäßig verteilt anzuordnen, bevor sie in die ringförmige Kammer münden. Um zudem eine leicht handhabbare Kopplung mit dem Druckmittelleitungsanschluss 78 bereitzustellen, kann der Druckmittelleitungsanschluss 78 eine leichtgängige Verschlusstechnik aufweisen, die vorzugsweise ohne eine Einrastfunktion auskommt. Schließlich können axial beiderseits der Wellendichtringe 50 und 52 Umfangsrippen 84 und 86 am Vorsprung 74 gebildet sein, die die Wellendichtringe 50 und 52 beim Einführen oder Abnehmen der Abdeckung 48 axial abstützen und verhindern, dass die Wellendichtringe 50 und 52 auf dem Vorsprung 74 axial verschoben werden oder ganz abrutschen.

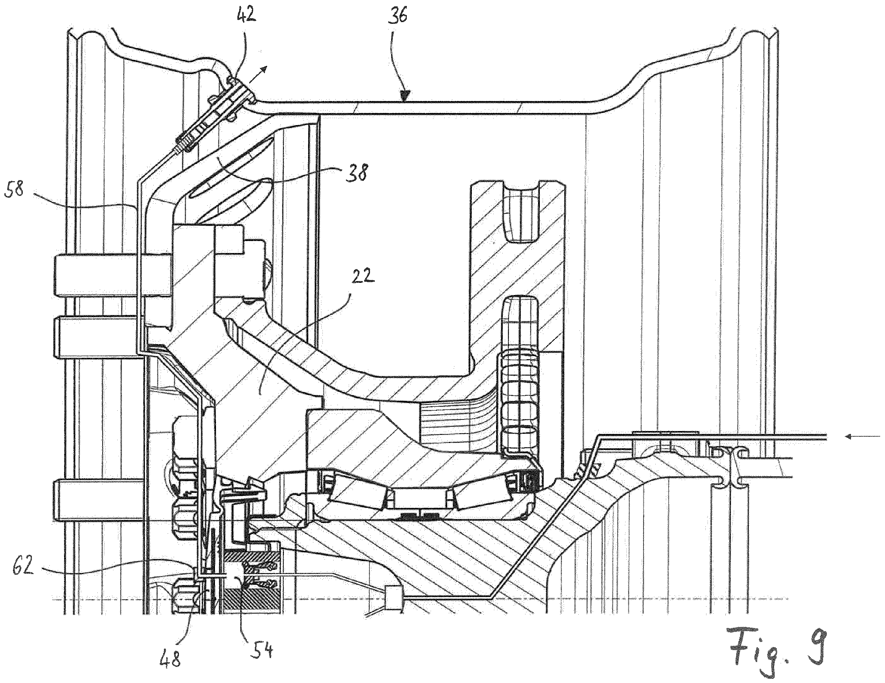

Aus der ringförmigen Kammer 54 heraus verläuft eine zweite Druckmittelleitung 58, die an ihrem kammerfernen Ende zur Verbindung mit dem am Rad 36 vorhandenen Ventil 42 ausgestaltet ist (in Figur 6 nicht dargestellt). Im gezeigten Beispiel erstreckt sich die zweite Druckmittelleitung 58 durch die Abdeckung 48. Mögliche Ausgestaltungen der weiteren Leitungsführung der zweiten Druckmittelleitung 58 bis zu dem Ventil 42 am Rad 36 werden später anhand der Figuren 9 bis 11 näher beschrieben.

Durch die in der Figur 6 beschriebene Anordnung der ersten Druckmittelleitung 56, der ringförmigen Kammer 54 und der zweiten Druckmittelleitung 58 ist eine Druckmittelweiterleitung von einer fahrzeugfesten Druckmittelquelle zu dem sich drehenden Rad 36 möglich. Während der Achskörper 14 und die erste Druckmittelleitung 56 feststehend sind, so drehen sich während der Fahrt die Nabe 12 und die mit der Nabe 12 verbundenen Komponenten, also insbesondere die zweite Druckmittelleitung 58, welche im Verlauf der Drehung über die ringförmige Kammer 54 immer fluidleitend mit der ersten Druckmittelleitung 56 gekoppelt ist. Da diese Kopplung unabhängig von der jeweiligen Drehstellung der Nabe 12 ist, kann eine Druckmittelzufuhr oder -abfuhr nicht nur im Stillstand, sondern auch während der Fahrt bei sich drehender Nabe 12 erfolgen. Mit der beschriebenen Anordnung kann eine Reifendruckregulierung daher ohne weiteres automatisiert werden.

Von wesentlicher Bedeutung bei dieser Variante der zweiten Fahrzeugachsbaugruppe ist, dass der zylindrische Vorsprung 74 der Abdeckung 48 und der hohlzylindrische Endabschnitt 76 des Achskörpers 14 koaxial ausgerichtet sind, damit der Vorsprung 74 bei einer Drehbewegung der Nabe 12 um den Achskörper 14 nicht relativ zu dem Endabschnitt 76 zu schlingern beginnt. Um eine präzise Ausrichtung der Abdeckung 48 zu erreichen, erstreckt sich die Abdeckung 48 im dargestellten Beispiel radial so weit, dass sie mit einer axialen Innenseite an einer axialen Außenseite des Flansches 22 flächig aneinander liegt. Die Schrauben 24, die zur Befestigung des Flansches 22 in dem äußeren Laufring 20 des Kugellagers 16 verwendet sind, erstrecken sich dann auch durch den am Flansch 22 anliegenden Teil der Abdeckung 48 und fixieren die Abdeckung 48 damit am Flansch 22. In einer anderen Ausführungsform kann auch vorgesehen sein, die Abdeckung durch separate Schrauben an dem Flansch 22 zu befestigen. Auch ist vorstellbar, die Abdeckung 48 einstückig mit dem Flansch 22 auszubilden. Dann allerdings wäre die Abdeckung 48 nur zusammen mit dem Flansch 22 abnehmbar.

Je nach Verlauf der zweiten Druckmittelleitung 58 durch die Abdeckung 48 kann es auch notwendig sein, die Abdeckung 48 bei der Montage auf dem Flansch 22 in ihrer Umfangsrichtung auszurichten, etwa um sicherzustellen, dass sich die durch die Abdeckung 48 erstreckende zweite Druckmittelleitung 58 in Richtung des Ventils 42 am Rad 36 verläuft. Zu diesem Zweck kann an der axialen Außenseite des Flansches 22 eine Ausnehmung vorhanden sein und an der an dieser Seite des Flansches 22 anliegenden Seite der Abdeckung 48 ein Vorsprung gebildet sein, der bei korrekter Ausrichtung der Abdeckung 48 in die Ausnehmung am Flansch 22 eingreift.

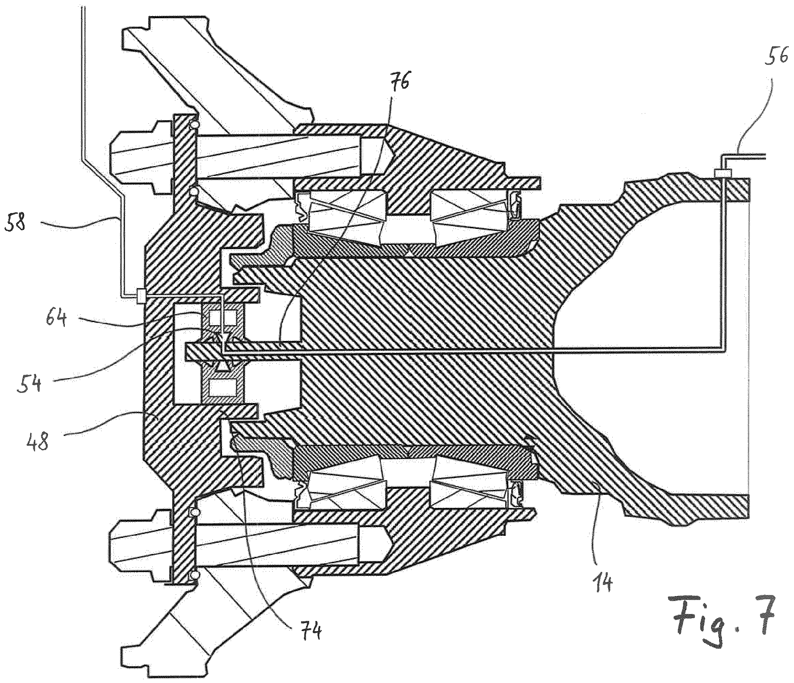

Die Figur 7 zeigt ein weiteres Ausführungsbeispiel, bei dem die zur Druckmittelleitung geeignete Kopplung gemäß der zweiten Variante der zweiten Fahrzeugachsbaugruppe ausgeführt ist. Dieses Beispiel unterscheidet sich von dem vorigen Beispiel dadurch, dass der an der axialen Innenseite der Abdeckung 48 gebildete Vorsprung 74 hohlzylindrisch ausgebildet ist und einen zylindrischen Endabschnitt 76 des Achskörpers 14 im Bereich deren axialer Überlappung umschließt. Die ringförmige Kammer 54 wird hier durch einen Wellendichtring 64 hergestellt, dessen Umfangsdichtlippen an seiner inneren Mantelfläche gebildet sind. Der Wellendichtring 64 ist zwischen dem Vorsprung 74 und dem Endabschnitt 76 abdichtend angeordnet, so dass die ringförmige Kammer 54 zwischen seiner inneren Mantelfläche, zwei seiner Umfangsdichtlippen und der äußeren Mantelfläche des Endabschnitts 76 begrenzt ist. Die erste Druckmittelleitung 56 erstreckt sich in die ringförmige Kammer 54 und die zweite Druckmittelleitung 58 erstreckt sich aus der ringförmigen Kammer 54 durch Wellendichtring 64 heraus in den Vorsprung 74. Auch in diesem Beispiel ist der Bereich der ringförmigen Kammer 54 mit dem Wellendichtring 64 aus Platzgründen nur vereinfacht und nicht detailgetreu dargestellt. Eine mögliche detaillierte Ausgestaltung dieses Bereichs wird später anhand der Figur 13 näher beschrieben.

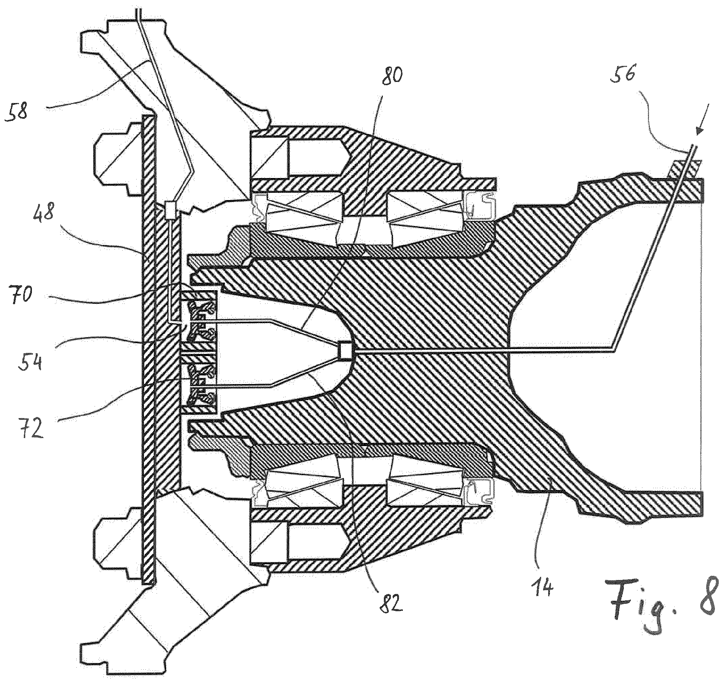

Die Figur 8 zeigt ein Ausführungsbeispiel, bei dem die zur Druckmittelleitung geeignete Kopplung gemäß der dritten Variante der zweiten Fahrzeugachsbaugruppe ausgeführt ist. Dieses Beispiel unterscheidet sich von dem Beispiel der Figur 6 dadurch, dass die ringförmige Kammer 54 hier zwischen den axial verlaufenden Seitenwänden eines mit der axialen Innenseite der Abdeckung 48 verbundenen Ringprofils 70 mit U-förmigem Querschnitt und einem bezüglich des Achskörpers 14 drehfesten Dichtring 72 begrenzt ist. Die erste Druckmittelleitung 56 spaltet sich analog zu dem Beispiel der Figur 6 in zwei Teilleitungen 80 und 82 auf, bevor sie sich durch den Dichtring 72 in die ringförmige Kammer 54 erstreckt. Die zweite Druckmittelleitung 58 erstreckt sich aus der ringförmigen Kammer 54 durch das Ringprofil 70 und die Abdeckung 48. Auch hier ist der Bereich der ringförmigen Kammer 54 mit dem Ringprofil 70 und dem Dichtring 72 aus Platzgründen nur vereinfacht und nicht detailgetreu dargestellt. Eine mögliche detaillierte Ausgestaltung dieses Bereichs wird später anhand der Figur 14 näher beschrieben.

Mögliche Ausgestaltungen der weiteren Leitungsführung der zweiten Druckmittelleitung 58 der zweiten Fahrzeugachsbaugruppe bis zu dem Ventil 42 am Rad 36 werden nun anhand der Figuren 9 bis 11 beschrieben.

In der in der Figur 9 gezeigten Ausführungsform der zweiten Fahrzeugachsbaugruppe erstreckt sich die zweite Druckmittelleitung 58 durch die Abdeckung 48 ausgehend von der ringförmigen Kammer 54 in im Wesentlichen axialer Richtung bis zu einem an dessen axialer Außenseite vorgesehenen, schematisch dargestellten Druckmittelleitungsanschluss 62. Die Führung der zweiten Druckmittelleitung 58 durch die Abdeckung 48 kann durch eine darin eingebrachte Bohrung realisiert sein. Es versteht sich jedoch, dass die Abdeckung 48 auch als Gussteil mit einer entsprechenden Leitung hergestellt sein kann. Von dem Druckmittelleitungsanschluss 62 erstreckt sich die zweite Druckmittelleitung 58 in ihrem weiteren Verlauf als Rohrleitung in im Wesentlichen radialer Richtung entlang der axialen Außenseite des Flansches 22 und axial außerhalb der Radschüssel 38 und ist schließlich mit dem Ventil 42 am Rad 36 verbunden. Der Druckmittelleitungsanschluss 62 kann vorteilhafterweise mit einer für einen Benutzer leicht handhabbare Verschlusstechnik, gegebenenfalls mit einer Einrastfunktion, realisiert sein.

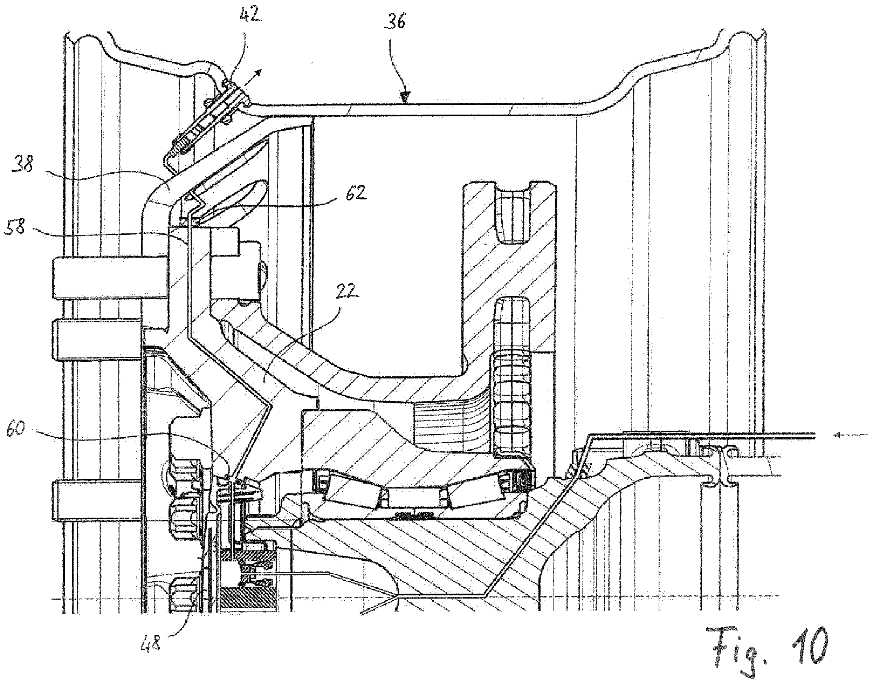

Die Figur 10 zeigt ein anderes Ausführungsbeispiel der zweiten Fahrzeugachsbaugruppe. Im Unterschied zum vorigen Beispiel ist die zweite Druckmittelleitung 58 hier nicht bis zu einem Druckmittelleitungsanschluss 62 geführt ist, der an einer axialen Außenseite der Abdeckung 48 vorgesehen ist, sondern an einen Druckmittelleitungsanschluss 62, der an einer Außenumfangsfläche des Flansches 22 vorhanden ist. Die zweite Druckmittelleitung 58 erstreckt sich zunächst durch die Abdeckung 48 in im Wesentlichen radialer Richtung bis zu dessen Außenumfangsfläche und geht von dort in den Flansch 22 über. Um einen druckdichten Übergang der zweiten Druckmittelleitung 58 zwischen der Abdeckung 48 und dem Flansch 22 zu gewährleisten, ist an der der Außenumfangsseite der Abdeckung 48 anliegenden Seite des Flansches 22 eine Ausnehmung 60 vorhanden, in der ein Dichtring angeordnet ist, beispielsweise ein O-Ring, der beim Montieren der Abdeckung 48 an dem Flansch 22 in der Ausnehmung 60 zusammengepresst wird und die zweite Druckmittelleitung 58 abdichtet. Die zweite Druckmittelleitung 58 erstreckt sich anschließend durch den Flansch 22 in im Wesentlichen radialer Richtung bis zu einem Druckmittelleitungsanschluss 62, der an einer Außenumfangsfläche des Flansches 22 vorgesehen ist. In der Darstellung der Figur 10 ist dieser Druckmittelleitungsanschluss 62 an der Außenumfangsfläche des Flansches 22 lediglich schematisch angedeutet. Die Führung der zweiten Druckmittelleitung 58 durch die Abdeckung 48 und den Flansch 22 kann beispielsweise durch in diese Bauteile eingebrachte Bohrungen realisiert sein. Es versteht sich jedoch, dass die Bauteile auch als Gussteile mit entsprechenden Leitungen hergestellt sein können.

Vom dem Druckmittelleitungsanschluss 62 erstreckt sich die zweite Druckmittelleitung 58 als Rohrleitung in im Wesentlichen radialer Richtung und ist in ihrem Verlauf zunächst axial innerhalb der Radschüssel 38 geführt, erstreckt sich anschließend durch ein in der Radschüssel 38 gebildetes Durchgangsloch 44 und verläuft im Weiteren axial außerhalb der Radschüssel 38 bis zur Verbindung mit dem am Rad 36 vorhandenen Ventil 42. Ein Vorteil dieser Variante ist, dass die zweite Druckmittelleitung 58 auf einem wesentlichen Teil ihrer Strecke vor äußerlichen Umwelteinflüssen geschützt geführt ist.

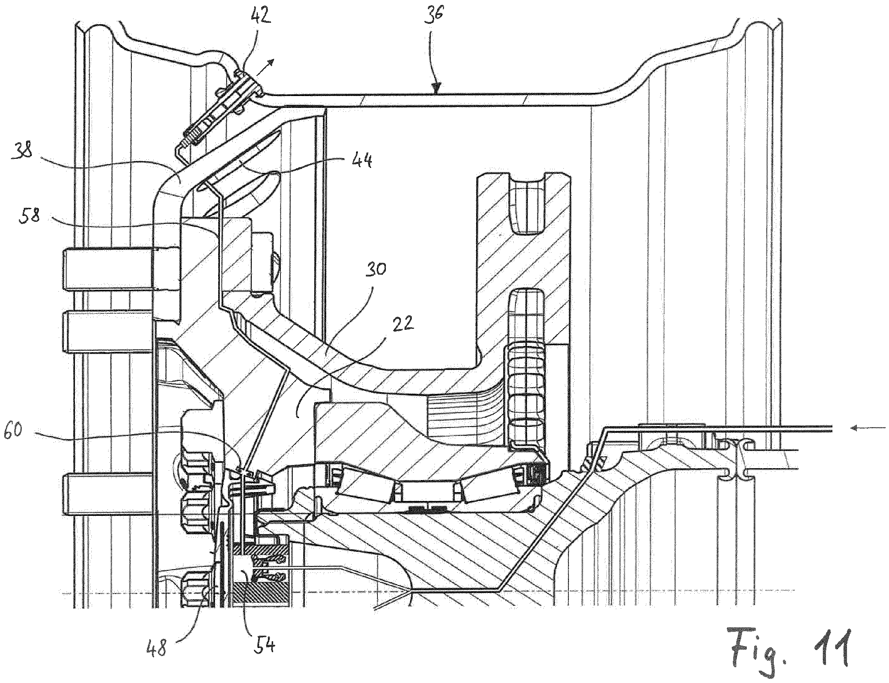

Die Figur 11 zeigt ein weiteres Ausführungsbeispiel der zweiten Fahrzeugachsbaugruppe. In dem hier dargestellten Ausführungsbeispiel erstreckt sich die zweite Druckmittelleitung 58 von der ringförmigen Kammer 54 zunächst auf gleiche Weise wie im vorigen Beispiel bis zum Flansch 22. Von der am Übergang zwischen der Abdeckung 48 und dem Flansch 22 vorhandenen Ausnehmung 60 erstreckt sich die zweite Druckmittelleitung 58 allerdings nun zu der axialen Innenseite des Flansches 22 und wird von dort als Rohrleitung entlang der axialen Innenseite des Flansches 22 bis zu einer Außenumfangsfläche des Flansches 22 geführt. Vorteilhafterweise kann die zweite Druckmittelleitung 58 auf ihrer Teilstrecke entlang der axialen Innenseite des Flansches 22 in einer in dem Flansch 22 vorhandenen Ausnehmung angeordnet sein. Die zweite Druckmittelleitung 58 kann beispielsweise mit halbem Umfang in der Ausnehmung versenkt sein. In dem Bereich der axialen Innenseite des Flansches 22, an dem die Halterung 30 der Bremsscheibe 28 anliegt, kann zusätzlich eine Ausnehmung an der am Flansch 22 anliegenden Fläche der Halterung 30 gebildet sein, so dass die Druckmittelleitung 58 je hälftig in den Ausnehmungen des Flansches 22 und der Halterung 30 versenkt und somit zwischen diesen fixiert ist. Eine derartige Anordnung der zweiten Druckmittelleitung 58 entlang der axialen Innenseite des Flansches 22 ist besonders deshalb vorteilhaft, da sie sich einfach verlegen bzw. montieren lässt, beispielsweise durch einfaches Eindrücken in die Ausnehmung, und zudem in ihrer Position aufgrund der Führung zwischen dem Flansch 22 und der Halterung 30 fixiert ist. Außerdem ist die zweite Druckmittelleitung 58 auch in dieser Ausführungsform auf einem wesentlichen Teil ihrer Strecke vor äußerlichen Umwelteinflüssen geschützt.

Im gezeigten Beispiel ist an der Außenumfangsfläche des Flansches 22 kein Druckmittelleitungsanschluss vorgesehen. Stattdessen ist die zweite Druckmittelleitung 58 nahtlos in radialer Richtung durch ein in der Radschüssel 38 gebildetes Durchgangsloch 44 bis zur Verbindung mit dem Ventil 42 am Rad 36 weitergeführt. Es versteht sich, dass an der Außenumfangsfläche des Flansches 22 auch ein geeigneter Druckmittelleitungsanschluss vorgesehen sein kann.

Auch eine Mischform der in den Figuren 9 und 11 gezeigten Ausführungsformen ist denkbar, nämlich wenn die zweite Druckmittelleitung 58, wie in Bezug auf Figur 9 beschrieben, zunächst axial außerhalb der Abdeckung 48 verläuft, dann aber nicht auf voller Strecke weiter axial außerhalb des Flansches 22 geführt ist, sondern lediglich bis zu einem im Flansch 22 gebildeten Durchgangsloch 46 (vgl. Figur 1), durch welches die zweite Druckmittelleitung 58 zur axialen Innenseite des Flansches 22 geführt wird. Von dort aus kann sie sich dann wie in Bezug auf Figur 11 beschrieben weiter bis zum Ventil 42 am Rad 36 erstrecken.

Schließlich wird auf die Figuren 12 bis 14 verwiesen. Diese Figuren zeigen Detailansichten der jeweils ersten, zweiten bzw. dritten Variante der ersten und zweiten Fahrzeugachsbaugruppe und veranschaulichen mögliche, detailgetreue Ausgestaltungen im Bereich der ringförmigen Kammer 54, die in den Figuren 2 bis 11 aus Platzgründen lediglich vereinfacht dargestellt sind.

Da die folgenden Ausführungen auf die erste und die zweite Fahrzeugachsbaugruppe gleichermaßen anwendbar sind, wird nachfolgend - um unnötige Wiederholungen zu vermeiden - die gemeinsame Bezeichnung "radial äußerer Körper 202" verwendet, um den äußeren Laufring 20 der ersten Fahrzeugachsbaugruppe sowie den hohlzylindrischen, den Endabschnitt umschließenden Vorsprung 74 bzw. den hohlzylindrischen, den Vorsprung umschließenden Endabschnitt 76 der zweiten Fahrzeugachsbaugruppe zu bezeichnen. Analog wird die gemeinsame Bezeichnung "radial innerer Körper 200" verwendet, um den inneren Laufring 18 der ersten Fahrzeugachsbaugruppe sowie den zylindrischen, vom Endabschnitt umschlossenen Vorsprung 74 bzw. den zylindrischen, vom Vorsprung umschlossenen Endabschnitt 76 der zweiten Fahrzeugachsbaugruppe zu bezeichnen.

Die Figur 12 zeigt ein mögliches Ausführungsbeispiel im Bereich der ringförmigen Kammer 54 der jeweils ersten Variante der ersten und zweiten Fahrzeugachsbaugruppe. In dem diesem Ausführungsbeispiel sind zwischen dem radial inneren Körper 200 und dem radial äußeren Körper 202 ein axial innerer Wellendichtring 50 und ein axial äußerer Wellendichtring 52 angeordnet, die durch handelsübliche Wellendichtringe, beispielsweise sogenannte Simmerringe®, gegeben sein können. Eine erste Druckmittelleitung 56 ist in dem Hohlraum zwischen dem radial inneren Körper 200 und dem radial äußeren Körper 202 geführt und erstreckt sich durch den axial inneren Wellendichtring 50, um in die ringförmige Kammer 54 zu münden. Aus der ringförmigen Kammer 54 heraus verläuft eine zweite Druckmittelleitung 58, die an ihrem kammerfernen Ende zur Verbindung mit einem Rad ausgestaltet ist.

Beide Wellendichtringe 50 und 52 haften jeweils radial innen durch Reibschluss an dem radial inneren Körper 200 und sind jeweils radial außen mit einer Hauptdichtlippe 88 bzw. 90 versehen, die durch eine von einer Schlauchfeder 92 bzw. 94 erzeugte Anpresskraft gegen den radial äußeren Körper 202 gedrückt wird und somit eine unmittelbare Abdichtung zwischen dem radial inneren Körper 200 und dem radial äußeren Körper 202 bewirkt. Bei einer Drehung des radial äußeren Körpers 202 um den radial inneren Körper 200 drehen sich die beiden Wellendichtringe 50 und 52 aufgrund des erwähnten Reibschlusses mit dem radial äußeren Körper 202 mit, so dass die Hauptdichtlippen 88 und 90 über die innere Mantelfläche des radial äußeren Körpers 202 gleiten.

Beide Wellendichtringe 50 und 52 sind radial außen und benachbart zu der ringförmigen Kammer 54 mit jeweils einem Kragen 96 bzw. 98 versehen. Beide Kragen 96 und 98 stehen zumindest bei einem Überdruck in der Kammer 54 mit der inneren Mantelfläche des radial äußeren Körpers 202 gleitend in Kontakt. Beide Wellendichtringe 50 und 52 sind außerdem durch ein sich zwischen den beiden Wellendichtringen 50 und 52 erstreckendes Verbindungselement 100 axial starr miteinander gekoppelt, welches ein axiales Auseinanderdriften der beiden Wellendichtringe 50 und 52 bei einem Überdruck in der Kammer 54 unterbindet. Wenn sich das Verbindungselement 100 durchgehend in Umfangsrichtung erstreckt, muss es mindestens eine Öffnung aufweisen, damit ein Druckmittel durch die Kammer 54 von der ersten Druckmittelleitung 56 zu der zweiten Druckmittelleitung 58 gelangen kann. Beide Wellendichtringe 50 und 52 weisen zudem jeweils einen Kern 102 bzw. 104 aus einem die Wellendichtringe 50 und 52 versteifenden Material auf. Die Kerne 102 und 104 bewirken eine Verstärkung der Wellendichtringe 50 und 52 einschließlich deren Kragen 96 und 98 und stabilisieren diese, so dass sie einem Überdruck in der Kammer 54 besser standhalten können und nicht umklappen.

Zum Zwecke der Schmiermittelvorhaltung sind die von der ringförmigen Kammer 54 abgewandten Seiten der Wellendichtringe 50 und 52 mit Abdeckungen 106 bzw. 108 versehen, welche die inneren Hohlräume 110 bzw. 112 der beiden Wellendichtringe 50 und 52, die durch die sich im Wesentlichen in axialer Richtung erstreckenden Schenkel der Wellendichtringe 50 und 52 begrenzt sind, nach außen hin verschließen. Durch die gepunkteten Schlangenlinien ist in der Darstellung der Figur 12 angedeutet, dass die Hohlräume 110 und 112 mit einem Schmiermittel befüllt sind. Damit in den Hohlräumen 110 und 112 vorhandenes Schmiermittel zu den Dichtflächen der Wellendichtringe 50 und 52 auf der inneren Mantelfläche des radial äußeren Körpers 202 gelangen kann, sind Kanäle 114 und 116 vorgesehen, die sich aus den Hohlräumen 110 und 112 in im Wesentlichen radialer Richtung durch diejenigen Schenkel der Wellendichtringe 50 und 52 erstrecken, die die Kragen 96 und 98 und die Hauptdichtlippen 88 und 90 der Wellendichtringe 50 und 52 miteinander verbinden. Die Hohlräume 110 und 112 dienen so als Schmiermitteldepots, welche nach und nach Schmiermittel zur Schmierung der Dichtflächen der Wellendichtringe 50 und 52 abgeben. Darüber hinaus ist eine Leitungen 118 vorgesehen, die den Hohlraum 110 des axial inneren Wellendichtrings 50 mit dem Hohlraum 112 des axial äußeren Wellendichtrings 52 miteinander verbindet. Die Leitung 118 ist durch das Verbindungselement 100 geführt und ermöglicht einen Transport von Schmiermittel von einem der beiden Hohlräume 110 und 112 in den jeweils anderen, so dass sich das Schmiermittel auf beide Hohlräume 110 und 112 verteilen kann.

Ferner sind in den Hohlräumen 110 und 112 schwammartige Materialien, hier Schaumstoffe 120 bzw. 122 vorhanden, die einen Teil der Hohlräume 110 und 112 ausfüllen und Eintrittsöffnungen der Kanäle 114 und 116 bedecken. Die Schaumstoffe 120 bzw. 122 sorgen dafür, dass in den Hohlräumen 110 und 112 befindliches Schmiermittel nicht unmittelbar durch die Kanäle 114 und 116 abfließt, sondern zunächst von den Schaumstoffen 120 bzw. 122 aufgenommen und gespeichert wird, um dann allmählich in die Kanäle 114 und 116 abgegeben zu werden. Darüber hinaus sind schwammartige Schaumstoffe 124 bzw. 126 jeweils in den Zwischenräumen zwischen den Kragen 96 bzw. 98 und den Hauptdichtlippen 88 bzw. 90 vorhanden. Aus den Hohlräumen 110 und 112 über die Kanäle 114 und 116 in diese Zwischenräume eintretendes Schmiermittel wird von den Schaumstoffen 124 bzw. 126 aufgenommen und anschließend von diesen gleichmäßig an den Dichtflächen der Wellendichtringe 50 und 52 auf der inneren Mantelfläche des radial äußeren Körpers 202 verteilt.

Die Figur 13 zeigt ein mögliches Ausführungsbeispiel im Bereich der ringförmigen Kammer 54 der jeweils zweiten Variante der ersten und zweiten Fahrzeugachsbaugruppe. In diesem Ausführungsbeispiel ist zwischen dem radial inneren Körper 200 und dem radial äußeren Körper 202 ein Wellendichtring 64 angeordnet, dessen ringförmiger Grundkörper 126 eine durch die radial innere Mantelfläche des Grundkörpers 126 gebildete, in Umfangsrichtung verlaufende Dichtfläche aufweist, die flächig an dem radial inneren Körper 200 anliegt, um mit diesem eine kraftschlüssige Verbindung herzustellen. Von der radial äußeren Mantelfläche des Grundkörpers 126 erstrecken sich zwei Umfangsdichtlippen 128 und 130 im Wesentlichen radial nach außen und begrenzen zwischen sich, der radial äußeren Mantelfläche des Grundkörpers 126 und der inneren Mantelfläche des radial äußeren Körpers 202 die ringförmige Kammer 54. Die Umfangsdichtlippen 128 und 130 weisen an ihrem freien Ende jeweils Gleitflächen auf, die mit der inneren Mantelfläche des radial äußeren Körpers 202 dichtend in Kontakt sind.

Eine erste Druckmittelleitung 56 ist in dem Hohlraum zwischen dem radial inneren Körper 200 und dem radial äußeren Körper 202 geführt und erstreckt sich durch den Wellendichtring 64, um in die ringförmige Kammer 54 zu münden. Genauer ist die erste Druckmittelleitung 56 über einen Anschluss 132 druckdicht und fluidleitend mit einer rohrförmigen Leitung 134 verbunden, die durch einen in einer seitlichen Außenwand des Grundkörpers 126 vorhandenen Druckmitteleinlass 136 des Wellendichtrings 64 geführt ist. Im gezeigten Beispiel ist die Leitung 134 durch den Einlass 136 bis in den Grundkörper 126 hinein geführt und steht außen über den Grundkörper 126 hinaus. Jedoch kann sich der Ausschluss 132 auch unmittelbar am Einlass 136 befinden und beispielsweise in der Seitenwand des Grundkörpers 126 ausgebildet sein. Im gezeigten Beispiel führt die Leitung 134 durch den Grundkörper 126 hindurch bis zu einem an der äußeren Mantelfläche des Grundkörpers 126 vorgesehenen Druckmittelauslass 138, der in die ringförmige Kammer 54 mündet. Aus der ringförmigen Kammer 54 heraus verläuft eine zweite Druckmittelleitung 58, die an ihrem kammerfernen Ende zur Verbindung mit einem Rad ausgestaltet ist.

Der Wellendichtring 64 weist einen inneren Hohlraum 140 auf, der von der ringförmigen Kammer 54 durch eine die äußere Mantelfläche des Grundkörpers 126 bildende Trennwand 142 druckdicht getrennt ist. Durch die gepunkteten Schlangenlinien ist in der Darstellung der Figur 13 angedeutet, dass der innere Hohlraum 140 mit einem Schmiermittel befüllt ist. Zudem weist der Wellendichtring 64 benachbart zu den beiden Umfangsdichtlippen 128 und 130 jeweils eine zusätzliche, sich radial erstreckende Umfangsdichtlippe 144 bzw. 146 auf. Zwischen den jeweils benachbarten Umfangsdichtlippen 128 und 144 bzw. 130 und 146 sind ringförmige Zwischenräume 148 und 150 gebildet.

Um in dem inneren Hohlraum 140 vorhandenes Schmiermittel zu den Gleitflächen der Umfangsdichtlippen 128 und 130 bzw. 144 und 146 führen zu können, sind Schmiermittelkanäle 152 und 154 vorgesehen, die sich aus dem inneren Hohlraum 140 in im Wesentlichen radialer Richtung erstrecken und in den Zwischenräumen 148 und 150 münden. Die Zwischenräume 148 und 150 sind nahezu vollständig mit schwammartigem Schaumstoff 156 bzw. 158 ausgefüllt, der bewirkt, dass durch die Kanäle 152 und 154 in die Zwischenräume 148 und 150 gelangtes Schmiermittel zunächst aufgenommen wird und anschließend gleichmäßig an die Gleitflächen der Umfangsdichtlippen 128, 130, 144 und 146 auf der inneren Mantelfläche des radial äußeren Körpers 202 verteilt wird. Zudem ist in dem inneren Hohlraum 140 ist ein schwammartiger Schaumstoff 160 vorhanden, der einen radial äußeren Bereich des inneren Hohlraums 140 ausfüllt und die Eintrittsöffnungen der Schmiermittelkanäle 152 und 154 überdeckt. Der Schaumstoff 160 stellt sicher, dass in dem inneren Hohlraum 140 befindliches Schmiermittel nicht ungebremst durch die Schmiermittelkanäle 152 und 154 abfließt, sondern zunächst von dem Schaumstoff 160 aufgenommen und gespeichert wird, um dann allmählich in die Schmiermittelkanäle 152 und 154 abgegeben zu werden.

Um seine Formstabilität zu verbessern, weist der Wellendichtring 64 einen in seinem Grundkörper 126 eingebetteten Kern 162 auf, der insbesondere bis in die Umfangsdichtlippen 128 und 130 hinein verlängert ist. Der Kern 162 bewirkt damit nicht nur eine Verstärkung des Grundkörpers 126, sondern auch eine Stabilisierung der Umfangsdichtlippen 128 und 130 derart, dass sie einem Überdruck in der Kammer 54 besser standhalten und insbesondere nicht seitlich nach außen umklappen können. Darüber hinaus sind in diesem Beispiel die die ringförmige Kammer 54 begrenzenden Umfangsdichtlippen 128 und 130 durch ein Verbindungselement 164 axial miteinander gekoppelt. Das Verbindungselement 164 gewährleistet, dass die Umfangsdichtlippen 128 und 130 bei einem Überdruck in der Kammer 54 zusammengehalten werden. Das Verbindungselement 164 kann in Umfangsrichtung durchgehend sein und muss wenigstens eine Öffnung aufweisen, damit Druckmittel aus der Druckmittelleitung 56 durch die ringförmige Kammer 54 in die Druckmittelleitung 58 gelangen kann.

Die Figur 14 zeigt ein mögliches Ausführungsbeispiel im Bereich der ringförmigen Kammer 54 der jeweils dritten Variante der ersten und zweiten Fahrzeugachsbaugruppe. In diesem Ausführungsbeispiel wird die ringförmige Kammer 54 durch ein mit der inneren Mantelfläche des radial äußeren Körpers 202 verbundenes Ringprofil 70 mit U-förmigem Querschnitt, dessen Seitenwände 166 und 168 axial verlaufen, und einen zwischen den Seitenwänden 166 und 168 angeordneten Dichtring 72 begrenzt. Der Dichtring 72 ist bezüglich des radial inneren Körpers 200 drehfest. Eine erste Druckmittelleitung 56 ist ebenfalls bezüglich des radial inneren Körpers 200 drehfest und erstreckt sich durch den Dichtring 72, um in die ringförmige Kammer 54 zu münden. Eine zweite Druckmittelleitung 58 erstreckt sich aus der ringförmigen Kammer 54 zunächst durch das Ringprofil 70 und anschließend durch den radial äußeren Körper 202, um an ihrem kammerfernen Ende mit einem Rad verbunden zu werden.

Der Dichtring 70 ist sowohl radial innen als auch radial außen mit einer Hauptdichtlippe 170 bzw. 172 versehen, die jeweils durch eine von einer Schlauchfeder 174 bzw. 176 erzeugte Anpresskraft gegen die Seitenwand 166 bzw. 168 gedrückt wird und somit eine Abdichtung zwischen den beiden Seitenwänden 166 bzw. 168 bewirkt. Bei einer Drehung des radial äußeren Körpers 202 um den radial inneren Körpers 200 steht der Dichtring 72 relativ zum radial inneren Körper 200 fest, während die mit den Seitenwänden 166 bzw. 168 in Kontakt stehenden Hauptdichtlippen 170 bzw. 172 über die Innenflächen der Seitenwände 166 bzw. 168 gleiten. Der Dichtring 72 ist ferner benachbart zu der ringförmigen Kammer 54 sowohl radial innen als auch radial außen mit einem Kragen 178 bzw. 180 versehen, die zumindest bei Überdruck in der ringförmigen Kammer 54 mit den Innenflächen der Seitenwände 166 bzw. 168 in Kontakt sind.

Um bei einem Überdruck in der Kammer 54 einem Herausdrücken des Dichtrings 72 aus den Seitenwänden 166 bzw. 168 des Ringprofils 70 entgegenzuwirken, ist eine Halterung vorgesehen, die als Anschlag 182 auf der ersten Druckmittelleitung 56 nahe der Mündung derselben in die Kammer 54 realisiert ist. Zudem sind im Bereich der offenen Enden der Seitenwände 166 bzw. 168 des Ringprofils 70 auf den Innenflächen der Seitenwände 166 bzw. 168 sich in Umfangsrichtung erstreckende Halterippen 184 bzw. 186 vorhanden, die eine axiale Bewegung des Dichtrings 72 aus dem Ringprofil 70 heraus verhindern, sobald die Hauptdichtlippen 170 bzw. 172 gegen die Halterippen 184 bzw. 186 stoßen.

Der Dichtring 72 weist einen inneren Hohlraum 190 auf, der durch die sich im Wesentlichen axial erstreckenden Schenkel des Dichtrings 72 gebildet ist und der als Schmiermitteldepot dient. Zu diesem Zweck sind die von der ringförmigen Kammer 54 abgewandten Seiten des Dichtrings 72 mit einer Abdeckung 192 versehen, die den Hohlraum 190 nach außen hin verschließt. Durch die gepunkteten Schlangenlinien ist in der Darstellung der Figur 14 angedeutet, dass der Hohlraum 190 mit einem Schmiermittel befüllt ist. Damit in dem Hohlraum 190 vorhandenes Schmiermittel zu den Dichtflächen des Dichtrings 72 auf den Seitenwänden 166 bzw. 168 des Ringprofils 70 gelangen kann, sind Kanäle 194 bzw. 196 vorgesehen, die sich aus dem Hohlraum 190 in im Wesentlichen radialer Richtung durch diejenigen Schenkel des Dichtrings 72 erstrecken, die die Kragen 178 bzw. 180 und die Hauptdichtlippen 170 bzw. 172 des Dichtrings 72 miteinander verbinden. Der Hohlraum 190 dient so als Schmiermitteldepot, welches nach und nach Schmiermittel zur Schmierung der Dichtflächen des Dichtrings 72 durch die Kanäle 194 bzw. 196 abgibt.

Schließlich weist der Dichtring 72 einen Kern 198 aus einem den Dichtring 72 versteifenden Material auf. Der Kern 198 bewirkt eine Verstärkung des Dichtrings 72 einschließlich dessen Kragen 178 bzw. 180 und stabilisiert diese, so dass sie einem Überdruck in der Kammer 54 besser standhalten können.

Es versteht sich, dass die in den Figuren 12 bis 14 gezeigten Ausgestaltungen im Bereich der ringförmigen Kammer 54 lediglich beispielhaft zu verstehen sind und dass viele weitere Ausführungsformen dieses Bereichs mit den eingangs beschriebenen Merkmalen denkbar sind. Für eine detailliertere Beschreibung solcher und weiterer möglicher Ausführungsformen im Bereich der ringförmigen Kammer 54 wird nochmals auf die internationale Patentanmeldung mit der Anmeldenummer PCT/EP2013/069599 sowie auf die deutsche Patentanmeldung mit der Anmeldenummer 10 2013 017 879.7 verwiesen.

## Patentansprüche

1. Fahrzeugachsbaugruppe mit:
- einer Nabe (12), die durch ein Kugellager (16) drehbar um eine Mittellängsachse (A) an einem zylindrischen Achskörper (14) gelagert ist, wobei das Kugellager (16) einen mit dem Achskörper (14) verbundenen, inneren Laufring (18) und einen mit der Nabe (12) verbundenen, äußeren Laufring (20) aufweist;
- einem axial inneren Wellendichtring (50) und einem axial äußeren Wellendichtring (52), die abdichtend zwischen den beiden Laufringen (18, 20) im Bereich eines axialen Endes des Kugellagers (16) angeordnet sind und zwischen den beiden Laufringen (18, 20) eine ringförmige Kammer (54) begrenzen;
- einer ersten Druckmittelleitung (56), die sich durch den inneren Laufring (18) oder einen der beiden Wellendichtringe (50, 52) erstreckt und in die ringförmige Kammer (54) mündet; und
- einer zweiten Druckmittelleitung (58), die sich aus der ringförmigen Kammer (54) durch den äußeren Laufring (20) erstreckt und zur Verbindung mit einem auf der Nabe (12) befestigten Rad (36) ausgestaltet ist.

2. Fahrzeugachsbaugruppe mit:
- einer Nabe (12), die durch ein Kugellager (16) drehbar um eine Mittellängsachse (A) an einem zylindrischen Achskörper (14) gelagert ist, wobei das Kugellager (16) einen mit dem Achskörper (14) verbundenen, inneren Laufring (18) und einen mit der Nabe (12) verbundenen, äußeren Laufring (20) aufweist;
- einem Wellendichtring (64) mit wenigstens zwei sich radial erstreckenden Umfangsdichtlippen, der abdichtend zwischen den beiden Laufringen (18, 20) im Bereich eines axialen Endes des Kugellagers (16) angeordnet ist und zwischen den Umfangsdichtlippen und einem der beiden Laufringe (18, 20) eine ringförmige Kammer (54) begrenzt;
- einer ersten Druckmittelleitung (56), die sich durch den inneren Laufring (18) und/oder den Wellendichtring (64) erstreckt und in die ringförmige Kammer (54) mündet; und
- einer zweiten Druckmittelleitung (58), die sich aus der ringförmigen Kammer (54) durch den Wellendichtring (64) und/oder den äußeren Laufring (20) erstreckt und zur Verbindung mit einem auf der Nabe (12) befestigten Rad (36) ausgestaltet ist.

3. Fahrzeugachsbaugruppe mit:
- einer Nabe (12), die durch ein Kugellager (16) drehbar um eine Mittellängsachse (A) an einem zylindrischen Achskörper (14) gelagert ist, wobei das Kugellager (16) einen mit dem Achskörper (14) verbundenen, inneren Laufring (18) und einen mit der Nabe (12) verbundenen, äußeren Laufring (20) aufweist;
- einem mit einer inneren Mantelfläche des äußeren Laufrings (20) verbundenen Ringprofil (70) mit U-förmigem Querschnitt, dessen Seitenwände axial oder radial verlaufen;
- einem zwischen den Seitenwänden angeordneten, bezüglich des inneren Laufrings (18) drehfesten Dichtring (72) im Bereich eines axialen Endes des Kugellagers (16), der in dem Ringprofil (70) eine ringförmige Kammer (54) begrenzt;
- einer ersten Druckmittelleitung (56), die sich durch den Dichtring (72) erstreckt und in die ringförmige Kammer (54) mündet; und
- einer zweiten Druckmittelleitung (58), die sich aus der ringförmigen Kammer (54) durch das Ringprofil (70) und den äußeren Laufring (20) erstreckt und zur Verbindung mit einem auf der Nabe (12) befestigten Rad (36) ausgestaltet ist.

4. Fahrzeugachsbaugruppe nach einem der Ansprüche 1 bis 3,
**dadurch gekennzeichnet, dass** die Nabe (12) einen Flansch (22) zur Befestigung des Rads (36) umfasst, wobei der Flansch (22) an dem äußeren Laufring (20) befestigt ist und die zweite Druckmittelleitung (58) sich durch den äußeren Laufring (20) und den Flansch (22) bis zu einem an dem Flansch (22) vorgesehenen Druckmittelleitungsanschluss (62) erstreckt.

5. Fahrzeugachsbaugruppe nach Anspruch 4,
**dadurch gekennzeichnet, dass** der Druckmittelleitungsanschluss (62) an einer axialen Außenseite des Flansches (22) vorgesehen ist.

6. Fahrzeugachsbaugruppe nach Anspruch 4,
**dadurch gekennzeichnet, dass** der Druckmittelleitungsanschluss (62) an einer Außenumfangsfläche des Flansches (22) vorgesehen ist.

7. Fahrzeugachsbaugruppe nach einem der Ansprüche 1 bis 3,
**dadurch gekennzeichnet, dass** die Nabe (12) einen Flansch (22) zur Befestigung des Rads (36) und der äußere Laufring (20) eine Bohrung (26) zur Aufnahme einer Druckmittelleitungsschraube (24) umfasst, wobei die Druckmittelleitungsschraube (24) zur Befestigung des Flansches (22) an dem äußeren Laufring (20) dient und die zweite Druckmittelleitung (58) sich durch den äußeren Laufring (20) in die Bohrung (26) erstreckt und durch die Druckmittelleitungsschraube (24) bis zu einem Druckmittelleitungsanschluss (62) verläuft, der an einem Kopf der Schraube (24) vorgesehen ist.

8. Fahrzeugachsbaugruppe nach Anspruch 7,
**dadurch gekennzeichnet, dass** der Flansch (22) mit dem äußeren Laufring (20) durch mehrere Schrauben (24) verbunden ist und die Bohrung (26), in der die Druckmittelleitungsschraube (24) aufgenommen ist, mit Bohrungen (26) fluidleitend verbunden ist, in denen die übrigen Schrauben (24) aufgenommen sind.

9. Fahrzeugachsbaugruppe nach einem der Ansprüche 4 bis 8,
**dadurch gekennzeichnet, dass** die zweite Druckmittelleitung (58) von dem Druckmittelleitungsanschluss (62) bis zur Verbindung mit dem Rad (36) als Rohr- oder Schlauchleitung ausgebildet ist.

10. Fahrzeugachsbaugruppe nach einem der Ansprüche 1 bis 3,
**dadurch gekennzeichnet, dass** die Nabe (12) einen Flansch (22) zur Befestigung des Rads (36) umfasst, wobei der Flansch (22) an dem äußeren Laufring (20) befestigt ist und die zweite Druckmittelleitung (58) sich durch den äußeren Laufring (20) oder entlang einer äußeren Mantelfläche desselben bis zu dem Flansch (22) und dann entlang einer axialen Innenseite des Flansches (22) bis zu einer Außenumfangsfläche des Flansches (22) erstreckt.

11. Fahrzeugachsbaugruppe nach Anspruch 10,
**dadurch gekennzeichnet, dass** entlang der äußeren Mantelfläche des äußeren Laufrings (20) und/oder entlang der axialen Innenseite des Flansches (22) eine Ausnehmung gebildet ist und die zweite Druckmittelleitung (58) in der Ausnehmung angeordnet ist.

12. Fahrzeugachsbaugruppe mit:
- einer Nabe (12), die um eine Mittellängsachse (A) drehbar an einem zylindrischen Achskörper (14) gelagert ist und eine Abdeckung (48) umfasst, die ein axiales Ende des Achskörpers (14) überdeckt;
- einem an einer axialen Innenseite der Abdeckung (48) gebildeten, zylindrischen Vorsprung (74), der sich mit einem zylindrischen Endabschnitt (76) des Achskörpers (14) axial überlappt;
- einem axial inneren Wellendichtring (50) und einem axial äußeren Wellendichtring (52), die abdichtend zwischen dem Vorsprung (74) und dem Endabschnitt (76) angeordnet sind und zwischen dem Vorsprung (74) und dem Endabschnitt (76) eine ringförmige Kammer (54) begrenzen;
- einer ersten Druckmittelleitung (56), die sich durch den Endabschnitt (76) oder einen der beiden Wellendichtringe (50, 52) erstreckt und in die ringförmige Kammer (54) mündet; und
- einer zweiten Druckmittelleitung (58), die sich aus der ringförmigen Kammer (54) durch den Vorsprung (74) erstreckt und zur Verbindung mit einem auf der Nabe (12) befestigten Rad (36) ausgestaltet ist.

13. Fahrzeugachsbaugruppe nach Anspruch 12,
**dadurch gekennzeichnet, dass** sich die erste Druckmittelleitung (56) in zumindest zwei Teilleitungen (80, 82) spaltet, bevor sie sich durch den einen der beiden Wellendichtringe (50, 52) erstreckt.

14. Fahrzeugachsbaugruppe mit:
- einer Nabe (12), die um eine Mittellängsachse (A) drehbar an einem zylindrischen Achskörper (14) gelagert ist und eine Abdeckung (48) umfasst, die ein axiales Ende des Achskörpers (14) überdeckt;
- einem an einer axialen Innenseite der Abdeckung (48) gebildeten, zylindrischen Vorsprung (74), der sich mit einem zylindrischen Endabschnitt (76) des Achskörpers (14) axial überlappt;
- einem Wellendichtring (64) mit wenigstens zwei sich radial erstreckenden Umfangsdichtlippen, der abdichtend zwischen dem Vorsprung (74) und dem Endabschnitt (76) angeordnet ist und zwischen den Umfangsdichtlippen und dem Vorsprung (74) oder dem Endabschnitt (76) eine ringförmige Kammer (54) begrenzt;
- einer ersten Druckmittelleitung (56), die sich durch den Endabschnitt (76) und/oder den Wellendichtring (64) erstreckt und in die ringförmige Kammer (54) mündet; und
- einer zweiten Druckmittelleitung (58), die sich aus der ringförmigen Kammer (54) durch den Wellendichtring (64) und/oder den Vorsprung (74) erstreckt und zur Verbindung mit einem auf der Nabe (12) befestigten Rad (36) ausgestaltet ist.

15. Fahrzeugachsbaugruppe nach Anspruch 14,
**dadurch gekennzeichnet, dass** die erste Druckmittelleitung (56) sich in zumindest zwei Teilleitungen (80, 82) spaltet, bevor sie sich durch den Wellendichtring (64) erstreckt.

16. Fahrzeugachsbaugruppe mit:
- einer Nabe (12), die um eine Mittellängsachse (A) drehbar an einem zylindrischen Achskörper (14) gelagert ist und eine Abdeckung (48) umfasst, die ein axiales Ende des Achskörpers (14) überdeckt;
- einem mit einer axialen Innenseite der Abdeckung (48) verbundenes Ringprofil (70) mit U-förmigem Querschnitt, dessen Seitenwände axial oder radial verlaufen;
- einem zwischen den Seitenwänden angeordneten, bezüglich des Achskörpers (14) drehfesten Dichtring (72), der in dem Ringprofil (70) eine ringförmige Kammer (54) begrenzt;
- einer ersten Druckmittelleitung (56), die sich durch den Dichtring (72) erstreckt und in die ringförmige Kammer (54) mündet; und
- einer zweiten Druckmittelleitung (58), die sich aus der ringförmigen Kammer (54) durch das Ringprofil (70) und die Abdeckung (48) erstreckt und zur Verbindung mit einem auf der Nabe (12) befestigten Rad (36) ausgestaltet ist.

17. Fahrzeugachsbaugruppe nach Anspruch 16,
**dadurch gekennzeichnet, dass** das Ringprofil (70) mit einem an der axialen Innenseite der Abdeckung (48) gebildeten, zylindrischen Vorsprung (74) verbunden ist.

18. Fahrzeugachsbaugruppe nach Anspruch 16 oder 17,
**dadurch gekennzeichnet, dass** das Ringprofil (70) einstückig mit der Abdeckung (48) ausgebildet ist.

19. Fahrzeugachsbaugruppe nach einem der Ansprüche 16 bis 18,
**dadurch gekennzeichnet, dass** die erste Druckmittelleitung (56) sich in zumindest zwei Teilleitungen (80, 82) spaltet, bevor sie sich durch den Dichtring (72) erstreckt.

20. Fahrzeugachsbaugruppe nach einem der Ansprüche 12 bis 19,
**dadurch gekennzeichnet, dass** die zweite Druckmittelleitung (58) sich durch die Abdeckung (48) bis zu einem Druckmittelleitungsanschluss (62) erstreckt, der an einer axialen Außenseite der Abdeckung (48) vorgesehen ist.

21. Fahrzeugachsbaugruppe nach einem der Ansprüche 12 bis 19,
**dadurch gekennzeichnet, dass** die Nabe (12) einen Flansch (22) zur Befestigung des Rads (36) umfasst, wobei die Abdeckung (48) mit dem Flansch (22) verbunden ist und die zweite Druckmittelleitung (58) sich durch die Abdeckung (48) und den Flansch (22) bis zu einem an dem Flansch (2) vorgesehenen Druckmittelleitungsanschluss (62) erstreckt.

22. Fahrzeugachsbaugruppe nach Anspruch 21,
**dadurch gekennzeichnet, dass** der Druckmittelleitungsanschluss (62) an einer axialen Außenseite des Flansches (22) vorgesehen ist.

23. Fahrzeugachsbaugruppe nach Anspruch 21,
**dadurch gekennzeichnet, dass** der Druckmittelleitungsanschluss (62) an einer Außenumfangsfläche des Flansches (22) vorgesehen ist.

24. Fahrzeugachsbaugruppe nach einem der Ansprüche 20 bis 23,
**dadurch gekennzeichnet, dass** die zweite Druckmittelleitung (58) von dem Druckmittelleitungsanschluss (62) bis zur Verbindung mit dem Rad (36) als Rohr- oder Schlauchleitung ausgebildet ist.

25. Fahrzeugachsbaugruppe nach einem der Ansprüche 12 bis 19,
**dadurch gekennzeichnet, dass** die Nabe (12) einen Flansch (22) zur Befestigung des Rads (36) umfasst, wobei die Abdeckung (48) mit dem Flansch (22) verbunden ist und die zweite Druckmittelleitung (58) sich durch die Abdeckung (48) und den Flansch (22) und dann entlang einer axialen Innenseite des Flansches (22) bis zu einer Außenumfangsfläche des Flansches (22) erstreckt.

26. Fahrzeugachsbaugruppe nach Anspruch 25,
**dadurch gekennzeichnet, dass** entlang der axialen Innenseite des Flansches (22) eine Ausnehmung gebildet ist und die zweite Druckmittelleitung (58) in der Ausnehmung angeordnet ist.

## Claims

1. A vehicle axle assembly, comprising:
- a hub (12) which is mounted on a cylindrical axle body (14) by way of a ball bearing (16) so as to be rotatable about a central longitudinal axis (A), wherein the ball bearing (16) has an inner race (18) connected to the axle body (14) and has an outer race (20) connected to the hub (12);
- an axially inner shaft sealing ring (50) and an axially outer shaft sealing ring (52) which are sealingly arranged between the two races (18, 20) in the region of one axial end of the ball bearing (16) and which delimit a ring-shaped chamber (54) between the two races (18, 20);
- a first pressure medium line (56) which extends through the inner race (18) or one of the two shaft sealing rings (50, 52) and which opens into the ring-shaped chamber (54); and
- a second pressure medium line (58) which extends from the ring-shaped chamber (54) through the outer race (20) and which is configured to be connected to a wheel (36) fastened on the hub (12).

2. A vehicle axle assembly, comprising:
- a hub (12) which is mounted on a cylindrical axle body (14) by way of a ball bearing (16) so as to be rotatable about a central longitudinal axis (A), wherein the ball bearing (16) has an inner race (18) connected to the axle body (14) and has an outer race (20) connected to the hub (12);
- a shaft sealing ring (64) with at least two radially extending circumferential sealing lips, which shaft sealing ring is sealingly arranged between the two races (18, 20) in the region of one axial end of the ball bearing (16) and delimits a ring-shaped chamber (54) between the circumferential sealing lips and one of the two races (18, 20);
- a first pressure medium line (56) which extends through the inner race (18) and/or the shaft sealing ring (64) and which opens into the ring-shaped chamber (54); and
- a second pressure medium line (58) which extends from the ring-shaped chamber (54) through the shaft sealing ring (64) and/or the outer race (20) and which is configured to be connected to a wheel (36) fastened on the hub (12).

3. A vehicle axle assembly, comprising:
- a hub (12) which is mounted on a cylindrical axle body (14) by way of a ball bearing (16) so as to be rotatable about a central longitudinal axis (A), wherein the ball bearing (16) has an inner race (18) connected to the axle body (14) and has an outer race (20) connected to the hub (12);
- a ring-shaped profile (70) of U-shaped cross section which is connected to an inner shell surface of the outer race (20) and the side walls of which run axially or radially;
- a sealing ring (72) which is arranged between the side walls and which is non-rotatable with respect to the inner race (18) in the region of one axial end of the ball bearing (16), which sealing ring delimits a ring-shaped chamber (54) in the ring-shaped profile (70);
- a first pressure medium line (56) which extends through the sealing ring (72) and which opens into the ring-shaped chamber (54); and
- a second pressure medium line (58) which extends from the ring-shaped chamber (54) through the ring-shaped profile (70) and the outer race (20) and which is configured to be connected to a wheel (36) fastened on the hub (12).

4. The vehicle axle assembly as claimed in one of claims 1 to 3,
**characterized in that** the hub (12) comprises a flange (22) for the fastening of the wheel (36), wherein the flange (22) is fastened to the outer race (20) and the second pressure medium line (58) extends through the outer race (20) and the flange (22) towards and up to a pressure medium line connector (62) provided on the flange (22).

5. The vehicle axle assembly as claimed in claim 4,
**characterized in that** the pressure medium line connector (62) is provided on an axial outer side of the flange (22).

6. The vehicle axle assembly as claimed in claim 4,
**characterized in that** the pressure medium line connector (62) is provided on an outer circumferential surface of the flange (22).

7. The vehicle axle assembly as claimed in one of claims 1 to 3,
**characterized in that** the hub (12) comprises a flange (22) for the fastening of the wheel (36), and the outer race (20) comprises a bore (26) for receiving a pressure medium line screw (24), wherein the pressure medium line screw (24) serves for the fastening of the flange (22) to the outer race (20), and the second pressure medium line (58) extends through the outer race (20) into the bore (26) and runs through the pressure medium line screw (24) towards and up to a pressure medium line connector (62) which is provided on a head of the screw (24).

8. The vehicle axle assembly as claimed in claim 7,
**characterized in that** the flange (22) is connected to the outer race (20) by way of multiple screws (24), and the bore (26) in which the pressure medium line screw (24) is received is fluidly connected to bores (26) in which the other screws (24) are received.

9. The vehicle axle assembly as claimed in one of claims 4 to 8,
**characterized in that** the second pressure medium line (58) is, from the pressure medium line connector (62) up to the connection to the wheel (36), in the form of a pipeline or hose line.

10. The vehicle axle assembly as claimed in one of claims 1 to 3,
**characterized in that** the hub (12) comprises a flange (22) for the fastening of the wheel (36), wherein the flange (22) is fastened to the outer race (20) and the second pressure medium line (58) extends through the outer race (20), or along an outer shell surface thereof, towards and up to the flange (22) and then extends along an axial inner side of the flange (22) towards and up to an outer circumferential surface of the flange (22).

11. The vehicle axle assembly as claimed in claim 10,
**characterized in that** a recess is formed along the outer shell surface of the outer race (20) and/or along the axial inner side of the flange (22), wherein the second pressure medium line (58) is arranged in the recess.

12. A vehicle axle assembly, comprising:
- a hub (12) which is mounted on a cylindrical axle body (14) so as to be rotatable about a central longitudinal axis (A) and which comprises a cover (48) which covers an axial end of the axle body (14);
- a cylindrical projection (74) which is formed on an axial inner side of the cover (48) and which axially overlaps a cylindrical end section (76) of the axle body (14);
- an axially inner shaft sealing ring (50) and an axially outer shaft sealing ring (52) which are sealingly arranged between the projection (74) and the end section (76) and which delimit a ring-shaped chamber (54) between the projection (74) and the end section (76);
- a first pressure medium line (56) which extends through the end section (76) or one of the two shaft sealing rings (50, 52) and which opens into the ring-shaped chamber (54); and
- a second pressure medium line (58) which extends from the ring-shaped chamber (54) through the projection (74) and which is configured to be connected to a wheel (36) fastened on the hub (12).

13. The vehicle axle assembly as claimed in claim 12,
**characterized in that** the first pressure medium line (56) splits into at least two sublines (80, 82) before it extends through said one of the two shaft sealing rings (50, 52).

14. A vehicle axle assembly, comprising:
- a hub (12) which is mounted on a cylindrical axle body (14) so as to be rotatable about a central longitudinal axis (A) and which comprises a cover (48) which covers an axial end of the axle body (14);
- a cylindrical projection (74) which is formed on an axial inner side of the cover (48) and which axially overlaps a cylindrical end section (76) of the axle body (14);
- a shaft sealing ring (64) with at least two radially extending circumferential sealing lips, which shaft sealing ring is sealingly arranged between the projection (74) and the end section (76) and delimits a ring-shaped chamber (54) between the circumferential sealing lips and the projection (74) or the end section (76);
- a first pressure medium line (56) which extends through the end section (76) and/or the shaft sealing ring (64) and which opens into the ring-shaped chamber (54); and
- a second pressure medium line (58) which extends from the ring-shaped chamber (54) through the shaft sealing ring (64) and/or the projection (74) and which is configured to be connected to a wheel (36) fastened on the hub (12).

15. The vehicle axle assembly as claimed in claim 14,
**characterized in that** the first pressure medium line (56) splits into at least two sublines (80, 82) before it extends through the shaft sealing ring (64).

16. A vehicle axle assembly, comprising:
- a hub (12) which is mounted on a cylindrical axle body (14) so as to be rotatable about a central longitudinal axis (A) and which comprises a cover (48) which covers an axial end of the axle body (14);
- a ring-shaped profile (70) of U-shaped cross section having axially or radially extending side walls which is connected to an axial inner side of the cover (48);
- a sealing ring (72) which is arranged between the side walls and which is non-rotatable with respect to the axle body (14) and which delimits a ring-shaped chamber (54) in the ring-shaped profile (70);
- a first pressure medium line (56) extending through the sealing ring (72) and opening into the ring-shaped chamber (54); and
- a second pressure medium line (58) extending from the ring-shaped chamber (54) through the ring-shaped profile (70) and the cover (48) and configured to be connected to a wheel (36) fastened on the hub (12).

17. The vehicle axle assembly as claimed in claim 16,
**characterized in that** the ring-shaped profile (70) is connected to a cylindrical projection (74) which is formed on the axial inner side of the cover (48).

18. The vehicle axle assembly as claimed in claim 16 or 17,
**characterized in that** the ring-shaped profile (70) is integral with the cover (48).

19. The vehicle axle assembly as claimed in one of claims 16 to 18,
**characterized in that** the first pressure medium line (56) splits into at least two sublines (80, 82) before extending through the sealing ring (72).

20. The vehicle axle assembly as claimed in one of claims 12 to 19,
**characterized in that** the second pressure medium line (58) extends through the cover (48) towards and up to a pressure medium line connector (62) which is provided on an axial outer side of the cover (48).

21. The vehicle axle assembly as claimed in one of claims 12 to 19,
**characterized in that** the hub (12) comprises a flange (22) for the fastening of the wheel (36), wherein the cover (48) is connected to the flange (22) and the second pressure medium line (58) extends through the cover (48) and the flange (22) towards and up to a pressure medium line connector (62) provided on the flange (22).

22. The vehicle axle assembly as claimed in claim 21,
**characterized in that** the pressure medium line connector (62) is provided on an axial outer side of the flange (22).

23. The vehicle axle assembly as claimed in claim 21,
**characterized in that** the pressure medium line connector (62) is provided on an outer circumferential surface of the flange (22).

24. The vehicle axle assembly as claimed in one of claims 20 to 23,
**characterized in that** the second pressure medium line (58) is, from the pressure medium line connector (62) up to the connection to the wheel (36), in the form of a pipeline or hose line.

25. The vehicle axle assembly as claimed in one of claims 12 to 19,
**characterized in that** the hub (12) comprises a flange (22) for the fastening of the wheel (36), wherein the cover (48) is connected to the flange (22) and the second pressure medium line (58) extends through the cover (48) and the flange (22) and then extends along an axial inner side of the flange (22) towards and up to an outer circumferential surface of the flange (22).

26. The vehicle axle assembly as claimed in claim 25,
**characterized in that** a recess is formed along the axial inner side of the flange (22), and the second pressure medium line (58) is arranged in the recess.

## Revendications

1. Ensemble essieu de véhicule comprenant :
- un moyeu (12) monté en rotation autour d'un axe longitudinal central (A) sur un corps de pont (14) cylindrique par un roulement à billes (16), dans lequel le roulement à billes (16) présente un chemin de roulement (18) interne relié au corps de pont (14) et un chemin de roulement (20) externe relié au moyeu (12) ;
- un joint d'étanchéité d'arbre (50) interne axial et un joint d'étanchéité d'arbre (52) externe axial, qui sont disposés de manière étanche entre les deux chemins de roulement (18, 20) dans la zone d'une extrémité axiale du roulement à billes (16) et définissent une chambre annulaire (54) entre les deux chemins de roulement (18, 20) ;
- une première conduite d'agent de pression (56) qui s'étend à travers le chemin de roulement (18) interne ou l'un des deux joints d'étanchéité d'arbre (50, 52) et aboutit dans la chambre annulaire (54) ; et
- une seconde conduite d'agent de pression (58) qui s'étend à partir de la chambre annulaire (54) à travers le chemin de roulement (20) externe et est équipée d'une roue (36) fixée au moyeu (12) aux fins de liaison.

2. Ensemble essieu de véhicule comprenant :
- un moyeu (12) monté en rotation autour d'un axe longitudinal central (A) sur un corps de pont (14) cylindrique par un roulement à billes (16), dans lequel le roulement à billes (16) présente un chemin de roulement (18) interne relié au corps de pont (14) et un chemin de roulement (20) externe relié au moyeu (12) ;
- un joint d'étanchéité d'arbre (64) comportant au moins deux lèvres d'étanchéité circonférentielles s'étendant radialement, lequel joint d'étanchéité d'arbre est disposé de manière étanche entre les deux chemins de roulement (18, 20) dans la zone d'une extrémité axiale du roulement à billes (16) et définit une chambre annulaire (54) entre les lèvres d'étanchéité circonférentielles et l'un des deux chemins de roulement (18, 20) ;
- une première conduite d'agent de pression (56) qui s'étend à travers le chemin de roulement (18) interne et/ou le joint d'étanchéité d'arbre (64) et aboutit dans la chambre annulaire (54) ; et
- une seconde conduite d'agent de pression (58) qui s'étend à partir de la chambre annulaire (54) à travers le joint d'étanchéité d'arbre (64) et/ou le chemin de roulement (20) externe et est équipée d'une roue (36) fixée au moyeu (12) aux fins de liaison.

3. Ensemble essieu de véhicule comprenant :
- un moyeu (12) monté en rotation autour d'un axe longitudinal central (A) sur un corps de pont (14) cylindrique par un roulement à billes (16), dans lequel le roulement à billes (16) présente un chemin de roulement (18) interne relié au corps de pont (14) et un chemin de roulement (20) externe relié au moyeu (12) ;
- un profil annulaire (70) de section transversale en forme de U relié à une surface d'enveloppe interne du chemin de roulement (20) externe, dont les parois latérales s'étendent axialement ou radialement ;
- un joint d'étanchéité (72) disposé entre les parois latérales et fixé en rotation par rapport au chemin de roulement (18) interne dans la zone d'une extrémité axiale du roulement à billes (16), lequel joint d'étanchéité définit une chambre annulaire (54) dans le profil annulaire (70) ;
- une première conduite d'agent de pression (56) qui s'étend à travers le joint d'étanchéité (72) et aboutit dans la chambre annulaire (54) ; et
- une seconde conduite d'agent de pression (58) qui s'étend à partir de la chambre annulaire (54) à travers le profil annulaire (70) et le chemin de roulement (20) externe et est équipée d'une roue (36) fixée au moyeu (12) aux fins de liaison.

4. Ensemble essieu de véhicule selon l'une des revendications 1 à 3, **caractérisé en ce que** le moyeu (12) comprend une bride (22) pour la fixation de la roue (36), dans lequel la bride (22) est fixée au chemin de roulement (20) externe et la seconde conduite d'agent de pression (58) s'étend à travers le chemin de roulement (20) externe et la bride (22) jusqu'à un raccord de conduite d'agent de pression (62) prévu au niveau de la bride (22).

5. Ensemble essieu de véhicule selon la revendication 4, **caractérisé en ce que** le raccord de conduite d'agent de pression (62) est prévu sur un côté externe axial de la bride (22).

6. Ensemble essieu de véhicule selon la revendication 4, **caractérisé en ce que** le raccord de conduite d'agent de pression (62) est prévu sur une surface circonférentielle externe de la bride (22).

7. Ensemble essieu de véhicule selon l'une des revendications 1 à 3, **caractérisé en ce que** le moyeu (12) comprend une bride (22) pour la fixation de la roue (36) et que le chemin de roulement (20) externe comprend un alésage (26) pour la réception d'une vis de conduite d'agent de pression (24), sachant que la vis de conduite d'agent de pression (24) sert à fixer la bride (22) au chemin de roulement (20) externe et que la seconde conduite d'agent de pression (58) s'étend à travers le chemin de roulement (20) externe dans l'alésage (26) et traverse la vis de conduite d'agent de pression (24) jusqu'à un raccord de conduite d'agent de pression (62) prévu au niveau d'une tête de la vis (24).

8. Ensemble essieu de véhicule selon la revendication 7, **caractérisé en ce que** la bride (22) est reliée au chemin de roulement (20) externe par une pluralité de vis (24) et que l'alésage (26), dans lequel la vis de conduite d'agent de pression (24) est reçue, est relié d'une manière conductrice de fluide aux alésages (26) dans lesquels les autres vis (24) sont reçues.

9. Ensemble essieu de véhicule selon l'une des revendications 4 à 8, **caractérisé en ce que** la seconde conduite d'agent de pression (58) allant du raccord de conduite d'agent de pression (62) à la liaison à la roue (36) est réalisée sous la forme de conduit rigide ou flexible.

10. Ensemble essieu de véhicule selon l'une des revendications 1 à 3, **caractérisé en ce que** le moyeu (12) comprend une bride (22) pour la fixation de la roue (36), dans lequel la bride (22) est fixée au chemin de roulement (20) externe et la seconde conduite d'agent de pression (58) s'étend à travers le chemin de roulement (20) externe ou le long d'une surface d'enveloppe externe de celui-ci jusqu'à la bride (22) et ensuite le long d'un côté interne axial de la bride (22) jusqu'à une surface d'enveloppe externe de la bride (22).

11. Ensemble essieu de véhicule selon la revendication 10, **caractérisé en ce qu'**un évidement est réalisé le long de la surface d'enveloppe externe du chemin de roulement (20) externe et/ou le long du côté interne axial de la bride (22) et que la seconde conduite d'agent de pression (58) est disposée dans l'évidement.

12. Ensemble essieu de véhicule comprenant :
- un moyeu (12) monté en rotation autour d'un axe longitudinal central (A) sur un corps de pont (14) cylindrique et comprenant un capot (48) recouvrant une extrémité axiale du corps de pont (14) ;
- une saillie cylindrique (74) réalisée sur un côté interne axial du capot (48) et chevauchant axialement une section d'extrémité (76) cylindrique du corps de pont (14) ;
- un joint d'étanchéité d'arbre (50) interne axial et un joint d'étanchéité d'arbre (52) externe axial, disposé de manière étanche entre la saillie (74) et la section d'extrémité (76) et définissant une chambre annulaire (54) entre la saillie (74) et la section d'extrémité (76) ;
- une première conduite d'agent de pression (56) qui s'étend à travers la section d'extrémité (76) ou l'un des deux joints d'étanchéité d'arbre (50, 52) et aboutit dans la chambre annulaire (54) ; et
- une seconde conduite d'agent de pression (58) qui s'étend à partir de la chambre annulaire (54) à travers la saillie (74) et est équipée d'une roue (36) fixée au moyeu (12) aux fins de liaison.

13. Ensemble essieu de véhicule selon la revendication 12, **caractérisé en ce que** la première conduite d'agent de pression (56) se divise en au moins deux conduites partielles (80, 82) avant de traverser l'un des deux joints d'étanchéité d'arbre (50, 52).

14. Ensemble essieu de véhicule comprenant :
- un moyeu (12) monté en rotation autour d'un axe longitudinal central (A) sur un corps de pont (14) cylindrique et comprenant un capot (48) recouvrant une extrémité axiale du corps de pont (14) ;
- une saillie cylindrique (74) réalisée sur un côté interne axial du capot (48) et chevauchant axialement une section d'extrémité (76) cylindrique du corps de pont (14) ;
- un joint d'étanchéité d'arbre (64) comportant au moins deux lèvres d'étanchéité circonférentielles s'étendant radialement, lequel joint d'étanchéité d'arbre est disposé de manière étanche entre la saillie (74) et la section d'extrémité (76) et définit une chambre annulaire (54) entre les lèvres d'étanchéité circonférentielles et la saillie (74) ou la section d'extrémité (76) ;
- une première conduite d'agent de pression (56) qui s'étend à travers la section d'extrémité (76) et/ou le joint d'étanchéité d'arbre (64) et aboutit dans la chambre annulaire (54) ; et
- une seconde conduite d'agent de pression (58) qui s'étend à partir de la chambre annulaire (54) à travers le joint d'étanchéité d'arbre (64) et/ou la saillie (74) et est équipée d'une roue (36) fixée au moyeu (12) aux fins de liaison.

15. Ensemble essieu de véhicule selon la revendication 14, **caractérisé en ce que** la première conduite d'agent de pression (56) se divise en au moins deux conduites partielles (80, 82) avant de traverser le joint d'étanchéité d'arbre (64).

16. Ensemble essieu de véhicule comprenant :
- un moyeu (12) monté en rotation autour d'un axe longitudinal central (A) sur un corps de pont (14) cylindrique et comprenant un capot (48) recouvrant une extrémité axiale du corps de pont (14) ;
- un profil annulaire (70) de section transversale en forme de U relié à un côté interne axial du capot (48), dont les parois latérales s'étendent axialement ou radialement ;
- un joint d'étanchéité (72) disposé entre les parois latérales et fixé en rotation par rapport au corps de pont (14), lequel joint d'étanchéité définit une chambre annulaire (54) dans le profil annulaire (70) ;
- une première conduite d'agent de pression (56) qui s'étend à travers le joint d'étanchéité (72) et aboutit dans la chambre annulaire (54) ; et
- une seconde conduite d'agent de pression (58) qui s'étend à partir de la chambre annulaire (54) à travers le profil annulaire (70) et le capot (48) et est équipée d'une roue (36) fixée au moyeu (12) aux fins de liaison.

17. Ensemble essieu de véhicule selon la revendication 16, **caractérisé en ce que** le profil annulaire (70) est relié à une saillie (74) cylindrique réalisée sur le côté interne axial du capot (48).

18. Ensemble essieu de véhicule selon la revendication 16 ou 17, **caractérisé en ce que** le profil annulaire (70) est réalisé d'une seule pièce avec le capot (48).

19. Ensemble essieu de véhicule selon l'une des revendications 16 à 18, **caractérisé en ce que** la première conduite (56) d'agent de pression se divise en au moins deux conduites partielles (80, 82) avant de traverser le joint d'étanchéité (72).

20. Ensemble essieu de véhicule selon l'une des revendications 12 à 19, **caractérisé en ce que** la seconde conduite d'agent de pression (58) s'étend à travers le capot (48) jusqu'à un raccord de conduite d'agent de pression (62) prévu sur un côté extérieur axial du capot (48).

21. Ensemble essieu de véhicule selon l'une des revendications 12 à 19, **caractérisé en ce que** le moyeu (12) comprend une bride (22) pour la fixation de la roue (36), dans lequel le capot (48) est relié à la bride (22) et la seconde conduite d'agent de pression (58) s'étend à travers le capot (48) et la bride (22) jusqu'à un raccord de conduite d'agent de pression (62) prévu au niveau de la bride (2).

22. Ensemble essieu de véhicule selon la revendication 21, **caractérisé en ce que** le raccord de conduite d'agent de pression (62) est prévu sur un côté externe axial de la bride (22).

23. Ensemble essieu de véhicule selon la revendication 21, **caractérisé en ce que** le raccord de conduite d'agent de pression (62) est prévu sur une surface circonférentielle externe de la bride (22).

24. Ensemble essieu de véhicule selon l'une des revendications 20 à 23, **caractérisé en ce que** la seconde conduite d'agent de pression (58) allant du raccord de conduite d'agent de pression (62) à la liaison à la roue (36) est réalisée sous la forme de conduit rigide ou flexible.

25. Ensemble essieu de véhicule selon l'une des revendications 12 à 19, **caractérisé en ce que** le moyeu (12) comprend une bride (22) pour la fixation de la roue (36), dans lequel le capot (48) est relié à la bride (22) et la seconde conduite d'agent de pression (58) s'étend à travers le capot (48) et la bride (22) et ensuite le long d'un côté interne axial de la bride (22) jusqu'à une surface d'enveloppe externe de la bride (22).

26. Ensemble essieu de véhicule selon la revendication 25, **caractérisé en ce qu'**un évidement est réalisé le long du côté interne axial de la bride (22) et que la seconde conduite d'agent de pression (58) est disposée dans l'évidement.
